# EUROPEAN PATENT APPLICATION

(11) **EP 2 445 240 A1**
(43) Date of publication of application: **25.04.2012**
(21) Application number: 10789150.9
(22) Date of filing: 13.05.2010
(51) Int. Cl.: H04W 12/06, H04W 84/10, H04W 88/08

(54) **WIRELESS COMMUNICATION DEVICE**

(30) Priority: 15.06.2009 JP 2009142577
(71) Applicant: Sharp Kabushiki Kaisha, Osaka-shi, Osaka 545-8522 (JP)
(72) Inventor: TSUNEKAWA, Koichi c/o SHARP KABUSHIKI KAISHA, Osaka 545-8522 (JP)
(74) Representative: Müller - Hoffmann & Partner
(86) International application number: PCT/JP2010/003246
(87) International publication number: WO 2010/146765

(57) **Abstract**

A wireless communication device includes: a storing unit configured to store recording medium identification information that identifies a recording medium that is detachable; a network communication unit that is connectable to a communication network; a reading unit configured to read the recording medium identification information stored in the recording medium; a recording medium identification information registering unit configured to write, to the storing unit, the recording medium identification information read by the recording unit; a wireless communication unit configured to wirelessly communicate with a communication terminal device attached with the recording medium, and to receive a recording medium identification information from the communication terminal device; and a communication control unit configured to at least control the network communication unit to transmit to the communication network, a signal from the communication terminal device, or to control the wireless communication unit to transmit to the communication terminal device, a signal from the communication network which is addressed to the communication terminal device, if the communication control unit determines that the recording medium identification information read from the storing unit is identical to the recording medium identification information received by the wireless communication unit.

## Description

### TECHNICAL FIELD

The present invention relates to a wireless communication device.
Priority is claimed on Japanese Patent Application No. 2009-142577, filed June 15, 2009, the content of which is incorporated herein by reference.

### BACKGROUND ART

Communication providers for cellular phones (hereinafter, "providers") install multiple base stations, which are called macrocell base stations with a communication coverage in the range of several hundred meters to several kilometers in radius, thereby providing various services, such as a voice call, a videophone call, and packet communication. The base stations belong to the category of wireless communication devices. Generally, installation positions, directivity of antennas, and the like are devised, and the base stations are installed so as to cover as large a service area as possible. However, it is difficult for only the macrocell base station to provide sufficient services to the entire service area. In the vicinity of a boundary of the macrocell base station, or in such a weak electric field region as an indoor location where electric waves hardly reach, there occurs a state in which sufficient communication speed or stable quality of communicating voice cannot be achieved. For this reason, an ultracompact wireless base station, which is called a femtocell base station with a communication coverage of several ten meters in radius, has been proposed.
Different from conventional base stations, the femtocell base station establishes connection through the IP (Internet Protocol Network) that is a packet communication network using the IP (Internet Protocol), that is, a broadband line such as ADSL, CATV, and an optical link which achieve the communication speed sufficient for the Internet. The femtocell base station establishes a connection to a core network installed by a provider via a broadband line and an IP network. Particularly, the femtocell base station for individual users establishes connection to a core network via a broadband line, the service of which is subscribed by individual users having the ownership or control of the femtocell base station. In such a manner, the femtocell base station is managed and maintained by personal expense, thereby causing a problem of unauthorized use of the femtocell base station by third parties.

To prevent unauthorized use of the femtocell base station by third parties, it can be considered that a specific mobile station (cellular phone terminal) is registered so that only the registered mobile station device can use the femtocell base station. By limiting the number of mobile station devices to be registered to the femtocell base station, the smaller number of terminals can exclusively use the femtocell base station, thereby enabling stable high-speed communication. As methods of registering a mobile station device allowed to use the femtocell base station to an exclusive right database positioned at one of network devices, a method of performing registration via the Internet, a method of performing registration via a call center, a method in which registration is performed by transmitting short message service (SMS), and the like, have been proposed in Patent Document 1.
Additionally, it is necessary to set parameters for the femtocell base station in order to prevent interference with a macrocell base station being used in the vicinity of the femtocell base station or interference with another femtocell base station. In Patent Document 2, a method of setting a base station ID (identifier) or a frequency for W-CDMA (Wideband Code Division Multiple Access) has been proposed.

### CITATION LIST

### [Non-Patent Document]

[Patent Document 1] Japanese Patent Unexamined Application, First Publication No. 2007-534227
[Patent Document 2] Japanese Patent Unexamined Application, First Publication No. 2006-261722

### DISCLOSURE OF THE INVENTION

### Problems to be Solved by the Invention

However, Patent-Document 1 does not show a method of inputting information identifying the mobile station device to the database. It can be considered that IMSI (International Mobile Subscriber Identity), which is the number for identifying the mobile station device, is used as the information for identifying the mobile station device. However, IMSI is a sequence of numbers, and therefore errors might occur when the sequence of numbers is input. Alternatively, it can be considered that a database, to which information for identifying the mobile station device is registered, is previously prepared so that the information is searched based on a telephone number or the like and is used. Also in this case, however, errors might occur when the database is generated. Additionally, a user of a dedicated mobile communication terminal, which is used when packet communication is performed by a personal computer (PC), unknowingly uses a telephone number in many cases. Further, it is general for this terminal not to have a function of displaying the telephone number. For this reason, it is considered that the user does not know the telephone number of this terminal. In such a case, the user has to confirm the telephone number in order to register the terminal to the femtocell base station.
Moreover, input errors (setting errors) occur when parameters for the femtocell base station are set, and therefore a setting might not be performed correctly. In addition to that, the number of providers is fixed to one in Patent Document 2. For this reason, compatibility with multiple providers is impossible.

The present invention has been made in consideration of the above situations. An object of the present invention is to provide a femtocell base station that can register without input errors, registration information, such as identification information of the mobile station device. Additionally, another object of the present invention is to provide a femtocell base station device that can be compatible with multiple providers. Additionally, another object of the present invention is to provide a femtocell base station that is neither illegally registered nor illegally used by third parties.

### Means for Solving the Problems

(1) The present invention has been made to solve the above problems. A communication device of one aspect of the present invention includes: a storing unit configured to store recording medium identification information that identifies a recording medium that is detachable; a network communication unit that is connectable to a communication network; a reading unit configured to read the recording medium identification information stored in the recording medium; a recording medium identification information registering unit configured to write, to the storing unit, the recording medium identification information read by the recording unit; a wireless communication unit configured to wirelessly communicate with a communication terminal device attached with the recording medium, and to receive recording medium identification information from the communication terminal device; and a communication control unit configured to at least control the network communication unit to transmit to the communication network, a signal from the communication terminal device, or to control the wireless communication unit to transmit to the communication terminal device, a signal from the communication network which is addressed to the communication terminal device, if the communication control unit determines that the recording medium identification information read from the storing unit is identical to the recording medium identification information received by the wireless communication unit.
Here, the detachable recording medium indicates a medium that stores recording medium identification information, such as a UIM card. The detachable recording medium may has a function other than the simple function of storing information. The recording medium identification information indicates information identifying the recording medium (such as IMSI, TISI, or ICCID in the case of the UIM card, which is information uniquely set to the UIM card). If the recording medium is attached to the communication terminal device, the recording medium identification information can be used as information for identifying the communication terminal device.

(2) The communication device according to the one aspect of the present invention further includes: a registration provider information storing unit configured to store provider identification information; a provider service information obtaining unit configured to obtain a setting parameter for the wireless communication unit; and a wireless communication setting unit configured to perform a setting of the wireless communication unit. The reading unit is configured to read provider identification information from the recording medium. The provider service information obtaining unit is configured to check the provider identification information stored in the registration provider information storing unit against the provider identification information from the reading unit, and to obtain, according to a result of checking, a setting parameter according to the provider identification information from the reading unit, from the communication device, or from an external server through the network communication unit, the external server being connected to the communication network. The wireless communication setting unit is configured to perform the setting of the wireless communication unit based on the setting parameter obtained, and to write the provider identification information from the reading unit to the registration provider information storing unit.

(3) The communication device according to the one aspect of the present invention further includes a plurality of wireless communication units. The registration provider information storing unit is configured to store a plurality of provider identification informations while associating each of the provider identification informations with any one of the wireless communication units. The network communication unit is configured to obtain the setting parameter if the provider identification information read by the reading unit is not identical to any one of the provider identification informations stored in the provider identification information storing unit. The wireless communication setting unit is configured to perform a setting of any of the wireless communication units based on the setting parameter obtained, to delete the provider identification information associated with the wireless communication unit subjected to the setting, and to write the provider identification information read by the reading unit while associating the provider identification information read with the wireless communication unit.

(4) Regarding the communication device according to the one aspect of the present invention, the network communication unit is configured to obtain, from the communication device or the external server, provider core network access destination information that is address information to be used for accessing the provider core network, according to the provider identification information from the reading unit, and to access the provider core network according to the provider core network access destination information.

(5) Regarding the communication device according to the one aspect of the present invention, the provider service information obtaining unit is configured to obtain the setting parameter and provider core network access destination information that is address information to be used for accessing the provider core network, the setting parameter and the provider core network access destination information being associated with the provider identification information from the reading unit. The provider service information obtaining unit is configured to write the provider identification information to the registration provider information storing unit. The wireless communication unit is configured to receive provider identification information from the wireless terminal device. The wireless communication setting unit is configured to perform a setting of the wireless communication unit based on the setting parameter associated with the provider identification information from the wireless communication unit. The network communication unit is configured to access the provider core network according to the provider core network access destination information associated with the provider identification information from the wireless communication unit.

(6) Regarding the communication device according to the one aspect of the present invention, the reading unit is configured to write to the recording medium, access allowance/forbiddance determination information that is information for determining whether or not an access to the wireless communication base station is allowed.

(7) Regarding the communication device according to the one aspect of the present invention, the reading unit reads the recording medium identification information from the recording medium according to a deletion order from an external unit. The control unit is configured to delete, from the storing unit, recording medium identification information identical to the recording medium identification information read by the reading unit.

(8) Regarding the communication device according to the one aspect of the present invention, the control unit is configured to delete, from the recording medium, the access allowance/forbiddance determination information according to the deletion order from the external unit.

(9) Regarding the communication device according to the one aspect of the present invention, the reading unit includes a connection unit to which the recording medium detachable is to be connected. The reading unit is configured to read the recording medium identification information from the recording medium connected to the connection unit.

### Effects of the Invention

According to the present invention, it is possible to register to the communication device, registration information, such as identification information of the mobile station device.

### BRIEF DESCRIPTION OF THE DRAWINGS

FIG. 1 is a schematic block diagram illustrating a configuration of a femtocell base station device 1 (ultracompact wireless base station device) according to a first embodiment of the present invention.
FIG. 2 is a schematic configuration diagram illustrating a configuration of a control unit 17 according to the first embodiment.
FIG. 3 is a schematic diagram illustrating connection relationship among a mobile station device using the femtocell base station 1, an IP network that the femtocell base station device 1 accesses, and a provider core network according to the first embodiment.
FIG. 4 is a data configuration diagram illustrating a configuration of mobile station device informations stored by the mobile station device information storing unit 14 according to the first embodiment.
FIG. 5 is a perspective view illustrating the outline of the outer shape of the femtocell base station device 1 according to the first embodiment.
FIG. 6 is a flowchart illustrating a procedure for the femtocell base station device 1 to register mobile station device information according to the first embodiment.
FIG. 7 is a flowchart illustrating operations of the femtocell base station device 1 when receiving a position registration request from the mobile station device according to the first embodiment.
FIG. 8 is a schematic block diagram illustrating a configuration of a femtocell base station device 2 according to a second embodiment of the present invention.
FIG. 9 is a schematic configuration diagram illustrating a configuration of a control unit 27 according to the second embodiment.
FIG. 10 is a data configuration diagram illustrating a configuration of registration provider informations stored by a registration provider information storing unit 28 according to the second embodiment.
FIG. 11 is a schematic diagram illustrating connection relationship between an IP network that the femtocell base station device 2 accesses, and a provider core network according to the second embodiment.
FIG. 12 is a flowchart illustrating a procedure for the femtocell base station device 2 to register mobile station device information and registration provider information according to the second embodiment.
FIG. 13 is a flowchart illustrating a procedure for the femtocell base station device 2 to register mobile station device information and registration provider information according to the second embodiment.
FIG. 14 is a schematic block diagram illustrating a configuration of a femtocell base station device 3 according to a third embodiment of the present invention.
FIG. 15 is a data configuration diagram illustrating a configuration of registration provider informations stored by a registration provider information storing unit 38 according to the third embodiment.
FIG. 16 is a flowchart illustrating a procedure for the femtocell base station device 3 to register mobile station device information and registration provider information according to the third embodiment.
FIG. 17 is a flowchart illustrating a procedure for the femtocell base station device 3 to register mobile station device information and registration provider information according to the third embodiment.
FIG. 18 is a flowchart illustrating operations of the femtocell base station device 3 when receiving a position registration request from the mobile station device according to the third embodiment.
FIG. 19 is a schematic block diagram illustrating a configuration of a femtocell base station device 4 according to a fourth embodiment of the present invention.

### BEST MODE FOR CARRYING OUT THE INVENTION

### (First Embodiment)

Hereinafter, embodiments of the present invention are explained with the drawings.

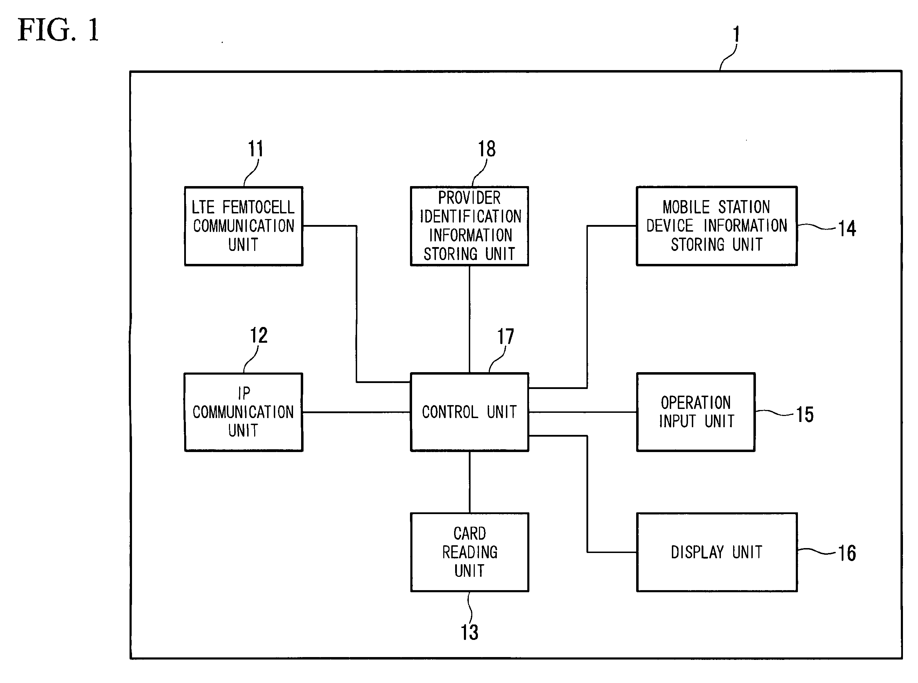

FIG. 1 is a schematic block diagram illustrating a configuration of a wireless communication device, particularly a femtocell base station device 1 (ultracompact wireless base station device), according to a first embodiment of the present invention. In FIG. 1, the femtocell base station device 1 includes: an LTE femtocell communication unit 11; an IP communication unit 12; a card reading unit 13; a mobile station device information storing unit 14; an operation input unit 15; a display unit 16; a control unit 17; and a provider identification information storing unit 18.
The LTE femtocell communication unit 11 wirelessly communicates with a cellular phone (mobile station device). The LTE femtocell communication unit 11 conforms to the standard of LTE (Long Term Evolution) defined by the 3GPP (Third Generation Partnership Project). The LTE femtocell communication unit 11 performs downlink communication by MIMO-OFDM (Multiple Input Multiple Output-Orthogonal Frequency Division Multiplexing). The LTE femtocell communication unit 11 performs uplink communication by MIMO SC-FDMA (Multiple Input Multiple Output Single Carrier-Frequency Division Multiple Access). The IP communication unit 12 (network communication unit) accesses an IP network (communication network) to perform communication. The card reading unit 13 reads mobile station device information from an UIM card (User Identity Module Card). An IMSI, which will be explained later, is included in the mobile station device information.
The IMSI is recoding medium identification information that identifies an UIM card. In other words, the card reading unit 13 (reading unit) reads, from the UIM card (detachable recording medium), the IMSI (recoding medium identification information) included in the mobile station device information. The mobile station device information storing unit 14 stores the mobile station device information read by the card reading unit 13. In other words, the mobile station device storing unit 14 (storing unit) stores recording medium identification information that identifies a recording medium. The operation input unit 15 receives an operation of a user. Upon receiving an operation that orders registration of mobile station device information, the operation input unit 15 outputs a registration order to the control unit 17. Upon receiving an operation that orders deletion of mobile station device information, the operation input unit 15 outputs a deletion order to the control unit 17. Upon receiving an operation that orders selection change of mobile station device information, the operation input unit 15 outputs a change order to the control unit 17. The display unit 16 displays a message, such as a warning. The control unit 17 controls each of the units. The provider identification information storing unit 18 previously stores, for one provider, information specifying the provider as will be explained later.

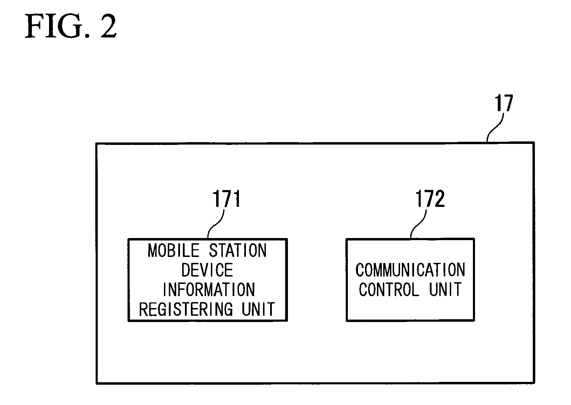

FIG. 2 is a schematic configuration diagram illustrating a configuration of the control unit 17.
In FIG. 2, the control unit 17 includes: a mobile station device information registering unit 171 (recoding medium identification information registering unit); and a communication control unit 172.
The mobile station device information registering unit 171 writes, deletes, and updates mobile station device information to and from the mobile station device information storing unit 14. The communication control unit 172 controls the LTE femtocell communication unit 11 and the IP communication unit 12 such that the mobile station device, through the femtocell base station 1, communicates with a provider core network connected to the IP network.

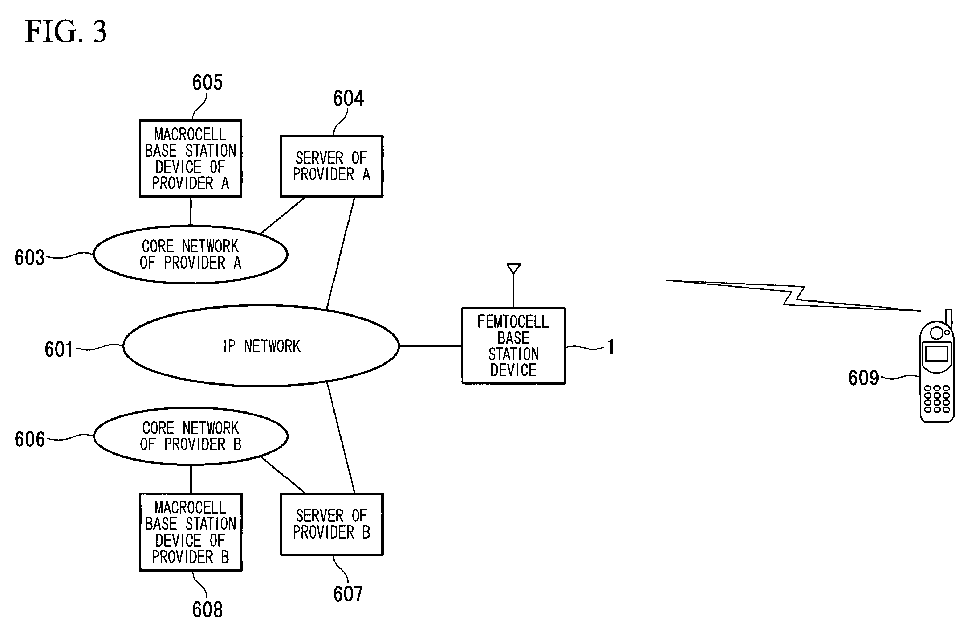

FIG. 3 is a schematic diagram illustrating connection relationship among a mobile station device using the femtocell base station 1, an IP network to which the femtocell base station device 1 accesses, and a provider core network. In FIG. 3, an IP network 601 is connected to the femtocell base station device 1 and multiple provider core networks (a core network 603 of a provider A and a core network 606 of a provider B). The mobile station device 609 performs wireless communication to access the femtocell base station device 1. The core network of the provider A and the core network of the provider B are core networks owned by a wireless communication provider A and a core network owned by a wireless communication provider B, respectively, and provide LTE cellular phone services. A server 604 of the provider A and a macrocell base station device 605 of the provider A are connected to a core network 603 of the provider A. A server 607 of the provider B and a macrocell base station device 608 of the provider B are connected to a core network 606 of the provider B. The femtocell base station device 1 is a femtocell base station device associated with the provider A. Using an IP address previously stored, the femtocell base station device 1 accesses the core network 603 of the provider A through the server 604 of the provider A. The macrocell base station device 605 of the provider A is a base station device which the mobile station device 609 accesses when the femtocell base station device 1 is not available. The macrocell base station device 608 of the provider B is a base station device which a mobile station device associated with the provider B accesses. The mobile station device 609 is associated with the provider A. The mobile station device 609 is a mobile station device allowed to use the femtocell base station device 1. The mobile station device 609 accesses the core network 603 of the provider A through the femtocell base station device 1, the IP network 601, and the server 604 of the provider A.

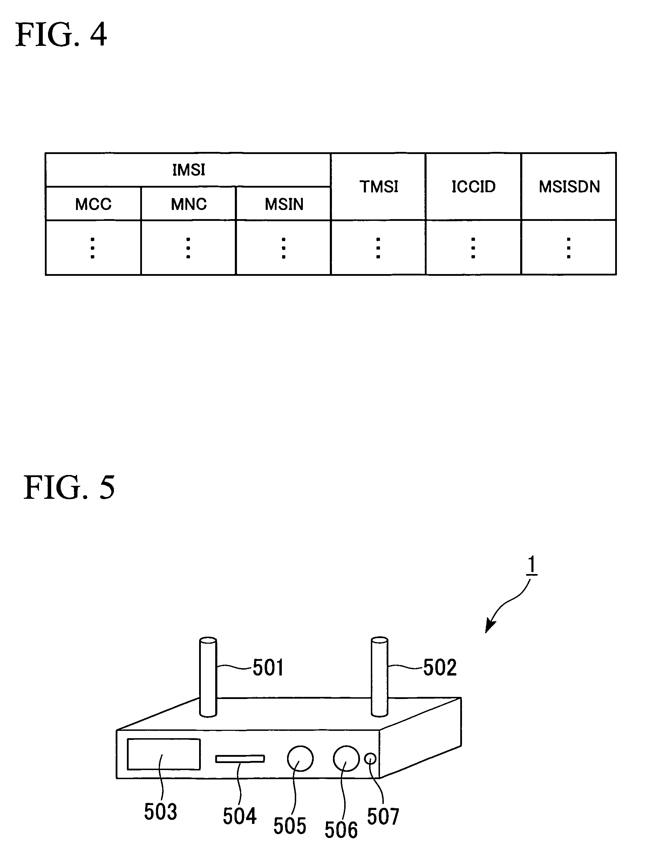

FIG. 4 is a data configuration diagram illustrating a configuration of mobile station device informations stored by the mobile station device information storing unit 14. In FIG. 4, the mobile station device information includes: an MCC (Mobile Country Code); an MNC (Mobile Network Code); an MSIN (Mobile Subscriber Identification Number); a TMSI (Temporary Mobile Subscriber Identity); and an ICCID (Integrated Circuit Card Identification); and an MSISDN (Mobile Subscriber ISDN Number). The mobile station device information storing unit 14 stores multiple mobile station device informations as a table data, in which each row data (illustration thereof is omitted in FIG. 4) corresponds to one mobile station device information.
The MCC is the identification number of country. The MNC is the identification number of a provider. The MCC and the MNC are used to identify a provider. Thus, which provider in which country has issued a UIM card can be determined. The provider identification information storing unit 18 stores the MCC and the MNC of the provider associated with the femtocell base station device 1. The control unit 17 determines whether or not the mobile station device, which is to be used by inserting the UIM card to be registered, is allowed to use the femtocell base station device, based on whether or not the MCC and the MNC stored by the provider identification information storing unit 18 are identical to the MCC and the MNC recorded in the UIM card. The MSIN is the identification number that a provider allocates to a subscriber. The number obtained by combining the MCC, the MNC, and the MSIN in this order is called an IMSI (International Mobile Subscriber Identity), which is unique for each UIM card, that is, the number identifying the UIM card. Additionally, the IMSI is used as the number identifying the mobile station device into which the UIM card is inserted. The TMSI (Temporary Mobile Subscriber Identity) is the temporary identification number issued by a network in lieu of the IMSI. Each mobile station device information stored by the mobile station device information storing unit 14 can be searched by using the IMSI or the TMSI as a main key.
The control unit 17 searches a mobile station device information by using the IMSI as a main key, and thus determines whether or not the mobile station device information has been registered. If the TMSI, instead of the IMSI, is received from the mobile station device, the control unit 17 searches a mobile station device information by using the TMSI as a main key. If the base station connected to a core network updates the TMSI, the TMSI is reported from the provider server to the femtocell base station device 1 through the IP network. Then, the control unit 17 updates the TMSI stored in the mobile station device information storing unit 14 to the reported contents. The ICCID is the unique identification number set for each card in order to identify a UIM card. The MSISDN is the telephone number.

FIG. 5 is a perspective view illustrating an outer shape of the femtocell base station device 1. In FIG. 5, the femtocell base station device 1 includes: antennas 501 and 502; a display panel 503; a UIM card slot (connection unit) 504; a registration start button 505; a registration deletion button 506; and a selection button 507.
The antennas 501 and 502 are antennas for performing wireless communication with the mobile station device. For the LTE, the number of antennas of the femtocell base station device 1 is defined as one, two, or four. The femtocell base station device 1 shown has two antennas and performs 2x2 MIMO (Multiple Input Multiple Output) communication with a mobile station device with two reception antennas. The display panel 503 is a panel for displaying a message, such as a warning. The femtocell base station device 1 may further include a speaker so as to give notice by sound or alarm tone, in addition to displaying a message. The UIM card slot 504 (connection unit) is an insertion unit for a UIM card. When a UIM card is inserted, the UIM card slot 504 is connected to the UIM card, and the card reading unit 13 reads data from the UIM card through the UIM slot 504.
The registration start button 505 is a push-button for ordering the registration of a mobile station device information. When the registration start button 505 is held down, the operation input unit 15 shown in FIG. 1 outputs a registration order to the control unit 17. The registration deletion button 506 is a push-button for ordering the deletion of a mobile station device information. When the registration deletion button 506 is held down, the operation input unit 15 shown in FIG. 1 outputs a deletion order to the control unit 17. The selection button 507 is a push-button for selecting a mobile station device information. When the selection button 507 is held down, the operation input unit 15 shown in FIG. 1 outputs a selection change order to the control unit 17.

For the mobile station device to perform communication, a UIM card has to be inserted into the mobile station device. Generally, the mobile station device has such a structure that a UIM card cannot be detached unless a battery is removed, in order to prevent communication by unauthorized use of the UIM card. For the femtocell base station to perform communication, on the other hand, a UIM card does not have to be inserted. Accordingly, in the case of the femtocell base station device, there is no need to consider unauthorized use such as in the case of the mobile station device. For this reason, there is no need to make such a structure that a UIM card cannot be detached. Instead, it is preferable to make such a structure that a UIM card is detachable even in operation. Therefore, the UIM card slot 504 is provided on the front surface of the femtocell base station device 1, thereby enabling an increase in operability. Additionally, the registration start button 505 is provided on the front surface, thereby enabling an increase in the operability.
When the UIM card detached from the mobile station device is inserted into the UIM card slot 504 of the femtocell base station device 1, and the registration start button 505 is held down, the femtocell base station device 1 starts a process of registering a user to be allowed to access. Then, the control unit 17 writes information for specifying a mobile station device to the mobile station device information storing unit 14. The information for specifying a mobile station device is read from the UIM card inserted into the UIM card slot 504.

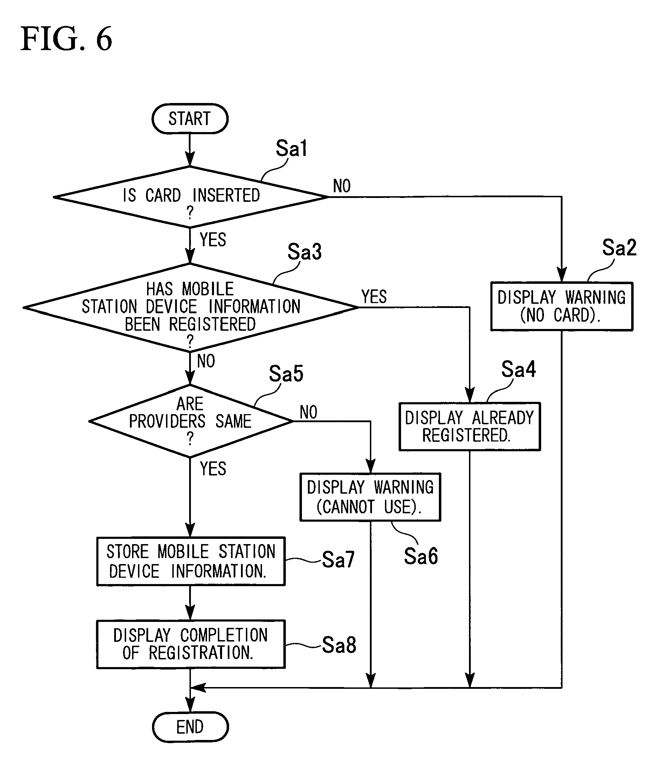

FIG. 6 is a flowchart illustrating a procedure for the femtocell base station device 1 to register a mobile station device information. When the registration start button 505 is held down, the operation input unit 15 inputs a registration order to the control unit 17. Then, the control unit 17 starts registration of a mobile station device information. In step Sa1, the card reading unit 13 determines whether or not a UIM card is inserted. If a UIM card is not inserted (step Sa1: NO), the femtocell base station 1 proceeds to step Sa2. If a UIM card is inserted (step Sa1: YES), the femtocell base station 1 proceeds to step Sa3. In step Sa2, the display unit 16 displays a warning indicating that a card is not inserted. Then, the femtocell base station 1 ends the registration process.
In step Sa3, the control unit 17 determines whether or not the mobile station device information recorded in the UIM card has been registered to the mobile station device information storing unit 14. If the mobile station device information has been registered (step Sa3: YES), the femtocell base station 1 proceeds to step Sa4. If the mobile station device information has not been registered (step Sa3: NO), the femtocell base station 1 proceeds to step Sa5. In step Sa4, the display 16 displays a message indicating that the mobile station device information has been registered. Then, the femtocell base station 1 terminates the registration process.
In step Sa5, the control unit 17 determines whether or not the provider specified by the MCC and the MNC recorded in the UIM card is identical to the provider associated with the femtocell base station 1. If the providers are different (step Sa5: NO), the femtocell base station 1 proceeds to step Sa6. If the providers are identical (step Sa5: YES), the femtocell base station 1 proceeds to step Sa7. In step Sa6, the femtocell base station 1 displays a message indicating that the femtocell base station is not available. Then, the femtocell base station 1 terminates the registration process.

In step Sa7, the control unit 17 reads the mobile station device information from the card reading unit 13, and writes the read mobile station device information to the mobile station device information storing unit 14. In other words, the control unit 17 (recording medium identification information registering unit) writes, to the mobile station device information storing unit 14 (storing unit), the IMSI (recording medium identification information), the TMSI, the ICCID, and the MSISDN, which are included in the mobile station device information. In step Sa8, the display unit 16 displays a message indicating that the registration is completed. Then, the femtocell base station device 1 terminates the registration process.
When the registration is completed, the display unit 16 may display the registered cellular phone number (MSISDN). Thus, an operator can confirm that the registration has been properly performed.
When the mobile station device information is registered, the card reading unit 13 (reading unit) may write, to the UIM card (recording medium), a connection allowance/forbiddance determination information, which is information for the card reading unit 13 (reading unit) to determine whether or not to allow the mobile station device to access the femtocell base station device 1 (wireless communication device). For example, the femtocell base station device 1 writes, to the UIM card, informations such as the base station ID used by the femtocell base station device 1, a frequency, and an installment position. The mobile station device, into which the UIM card is inserted, reads the informations recorded in the UIM card when requesting position registration, and requests the femtocell base station device 1 to perform a position registration. Thus, even when the mobile station device is present in an area served by multiple base stations, there is no need to sequentially search to which base station the mobile station device is allowed to access. Accordingly, fast position registration can be expected.

When the process of registering the mobile station device information ends, the UIM card is removed from the UIM card slot 504, and is inserted into the mobile station device. When the mobile station device, into which the UIM card is inserted, is powered on, the mobile station device transmits a position registration request to an accessible base station.
If the mobile station device is present in environments in which the mobile station device can stably receive electric waves from the femtocell base station device 1, the position of the mobile station device is registered to the femtocell base station device 1. When receiving the position registration request from the mobile station device, the femtocell base station device 1 confirms whether or not the information received from the mobile station device is identical to the information stored in the mobile station device information storing unit 14.
In other words, the femtocell base station device 1 receives the IMSI from the mobile station device, and confirms whether or not the received IMSI is identical to the IMSI stored in the mobile station device information storing unit 14. If the mobile station device transmits the TMSI, the femtocell base station device 1 confirms whether or not the received TMSI is identical to the TMSI stored in the mobile station device information storing unit 14. Alternatively, if the mobile station device has a function of reporting the ICCID to the femtocell base station device 1, the femtocell base station device 1 may confirm whether or not the ICCID received from the mobile station device is identical to the ICCID stored in the mobile station device information storing unit 14. If the ICCIDs are identical, the femtocell allows the position registration requested by the mobile station device.

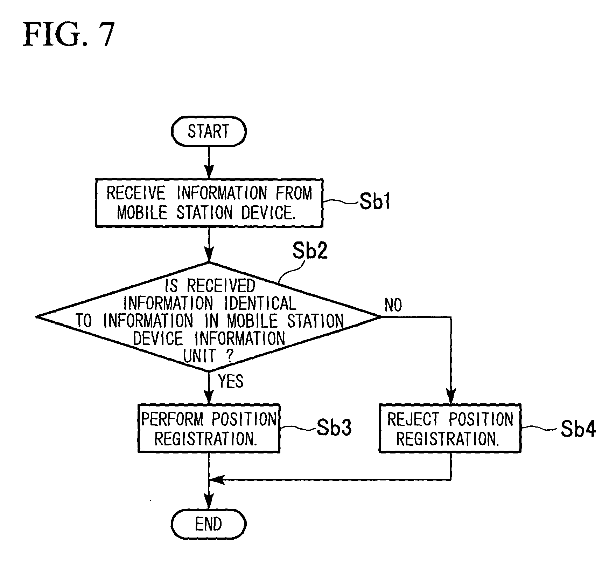

FIG. 7 is a flowchart illustrating operations of the femtocell base station device 1 when receiving a position registration request from the mobile station device. When the LTE femtocell communication unit 11 receives a position registration request from the mobile station device, the femtocell base station device 1 initiates a position registration process.
In step Sb1, the LTE femtocell communication unit 11 receives a mobile station device information from the mobile station device. In other words, the LTE femtocell communication unit 11 (wireless communication unit) wirelessly communicates with the mobile station device (communication terminal device) attached with the UIM card (recording medium), and receives from the mobile station device (communication terminal device), the IMSI (recording medium identification information) included in mobile station device information. In step Sb2, the control unit 17 determines whether or not a mobile station device information matching the mobile station device information received by the LTE femtocell communication unit 11 is stored in the mobile station device information storing unit 14. If there is a matching mobile station device (step Sb2: YES), the femtocell base station device 1 proceeds to step Sb3. If there is no matching mobile station device (step Sb2: NO), the femtocell base station device 1 proceeds to step Sb4.

In step Sb3, the IP communication unit 12 transmits a position registration request to the provider core network through the provider server. Then, a home location register (HLR) connected to the provider core network performs position registration. Thus, the femtocell base station device 1 terminates the position registration process. In step Sb4, the control unit 17 rejects position registration, in other words, does not performs position registration. Then, the femtocell base station device 1 terminates the position registration process. The mobile station device, the position registration of which has been complete, can access the provider core network through the femtocell base station device 1. Thus, the mobile station device can perform a voice call, a videophone call, packet communication, and the like. As explained above, the control unit 17 of the femtocell base station device 1 checks the IMSI read from the mobile station device information storing unit 14 against the IMSI received by the LTE femtocell communication unit 11. According to the result of the checking, the control unit 17 performs a control such that the mobile station device is connected to the provider core network connected to the IP network, through the LTE femtocell communication unit 11 and the IP communication unit 12. In other words, if the control unit 17 (communication control unit) determines that the IMSI (recording medium identification information) read from the mobile station device information storing unit 14 (storing unit) matches the IMSI (recording medium identification information) received by the LTE femtocell communication unit 11, the control unit 17 controls the IP communication unit 12 (network communication unit) so as to transmit, to the IP network (communication network), the signal that is transmitted from the mobile station device (communication terminal device) and is received by the LTE femtocell communication unit 11 (wireless communication unit). Additionally, the control unit 17 controls the LTE femtocell communication unit 11 (wireless communication unit) so as to transmit, to the mobile station device (communication terminal device), the signal addressed to the mobile station device (communication terminal device), which is received from the IP network (communication network).
On the other hand, the mobile station device, the position registration of which has been rejected, cannot use the femtocell base station device 1. For this reason, the mobile station device accesses the macrocell base station device to perform communication.

When the registered mobile station device performs position registration to the femtocell base station for the first time, the femtocell base station device 1 may transmit, to the mobile station device, a mail indicating that registration has been properly performed, so that a user can confirm whether or not the registration to the femtocell base station device 1 has been properly performed. In this case, the femtocell base station device 1 includes a mail transmitter. When position registration is performed, the mail transmitter confirms whether or not a newly registered mobile station device information is included in the registered mobile station device informations registered to the mobile station device information storing unit 14. If there is a newly registered mobile station device information, the mail transmitter determines whether or not information of the mobile station device having been subjected to the position registration is identical to the mobile station device information newly registered to the mobile station device information storing unit 14. If the information is identical to the newly registered mobile station device information, the mail transmitter reports, to a user, that the registration has been properly performed using short message services or a mail function provided by a provider. The mobile station device information stored in the mobile station device information storing unit 14 may be displayed on the display unit 16 of the femtocell base station device 1. Thus, the user can confirm that the registration has been properly completed.

Additionally, it can be considered that it is necessary to delete the registration of the mobile station device, such as when the number of mobile station devices to be registered to the femtocell base station device is limited. The femtocell base station device 1 deletes a mobile station device information according to a user operation, and thereby deletes the registration of the mobile station device. When a deletion order is input from the operation input unit 15 by a user holding down the registration deletion button 506 (shown in FIG. 5), the control unit 17 deletes the mobile station device information selected by the user. Firstly, the control unit 17 selects the mobile station device information stored first, from among mobile station device informations stored in the mobile station device information storing unit 14. The display unit 16 displays the MSISDN (information that is recognized by the user) included in the selected mobile station device information. Upon receiving a selection change order from the operation input unit 15, the control unit 17 selects the mobile station device information stored next (the mobile station device information stored first when the last mobile station device information is selected). Then, the display unit 16 displays the MSISDN included in the selected mobile station device information. Upon receiving an additional deletion order from the operation input unit 15 by the user holding down the registration deletion button 506 (shown in FIG. 5) again, the control unit 17 deletes the selected mobile station device information from the mobile station device information storing unit 14.

Alternatively, a UIM card of a user to be deleted may be inserted, and then the registration deletion button may held down, so that the information specified by the UIM card is deleted from the mobile station device information storing unit 14. In this case, the card reading unit (reading unit) reads, from the UIM card (recording medium), a mobile station device identification information including the IMSI (recording medium identification information), according to a deletion order from the user (deletion order from an external unit). The control unit 17 deletes, from the mobile station device information storing unit 14 (storing unit), the mobile station device information including the IMSI (recording medium identification information) identical to the IMSI (recording medium identification information) read by the card recording unit (recording unit). Further, if a connection allowance/forbiddance determination information is written into the UIM card when the mobile station device information is registered, the control unit 17 deletes the connection allowance/forbiddance determination information from the UIM card (recording medium) according to the deletion order from the user (deletion order from the external unit). A UIM card is inserted to delete a mobile station device information, thereby preventing information of another user from being deleted by mistake.
Alternatively, in a small office, store, or the like, in which an unspecified number of users temporarily use the femtocell base station device 1, the mobile station device information storing unit 14 may store, for each mobile station device, the time at which the mobile station device accesses the femtocell base station device 1 for the last time, so that the control unit 17 deletes, without any order from a user, the mobile station device information associated with the oldest time.
The writing of the connection allowance/forbiddance determination information to the UIM card and deletion of the mobile station device identification information from the mobile station device information storing unit 14 apply to the second and following embodiments.

As explained above, the UIM card is removed from the mobile station device, and is inserted into the UIM card slot of the femtocell base station device 1 to register a mobile station device information, thereby preventing incorrect registration caused by input errors. Additionally, the UIM card has to be inserted into the femtocell base station device 1 in order to register a mobile station device information. For this reason, different from the case in which registration is performed by wireless communication, a third party without any right is prevented from performing unauthorized registration by remote operation, and performing unauthorized use of the femtocell base station device 1. Further, the mobile station device does not have to be provided with the function of performing registration to the femtocell base station device. Accordingly, even a mobile station device not having a communication function for accessing the femtocell base station device, such as a mobile station device that is connected to a personal computer via a USB (Universal Serial Bus) or the like, and is used specifically for packet communication, can be registered easily.

### (Second Embodiment)

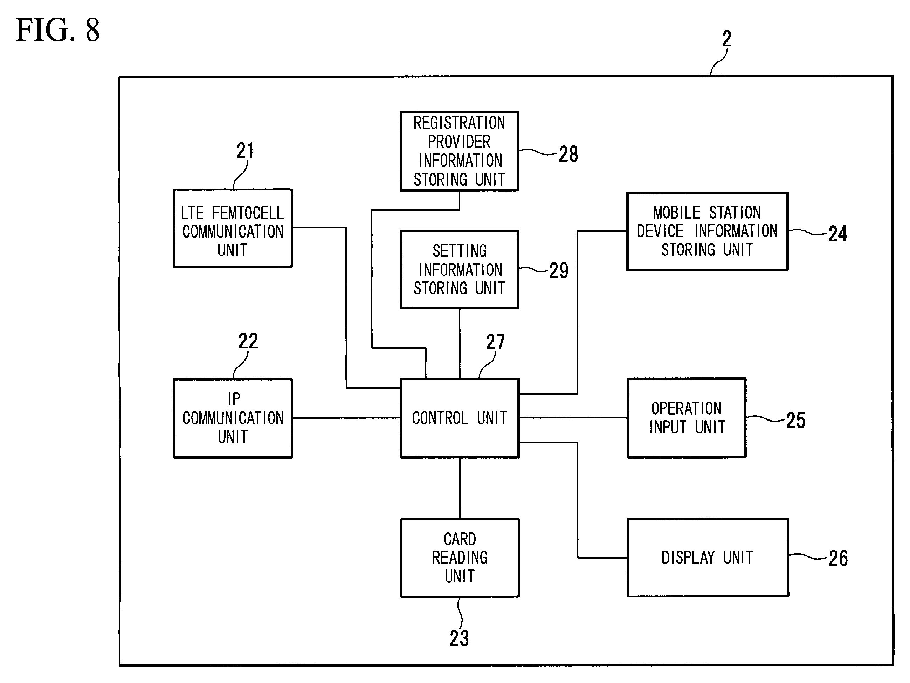

Hereinafter, a second embodiment of the present invention is explained. FIG. 8 is a schematic block diagram illustrating a configuration of a femtocell base station device 2 according to the second embodiment of the present invention. The outer shape of the femtocell base station device 2 is the same as that shown in the perspective view of FIG. 5 of the first embodiment. In FIG. 8, the femtocell base station device 2 includes: an LTE femtocell communication unit 21; an IP communication unit 22; a card reading unit 23; a mobile station device information storing unit 24; an operation input unit 25; a display unit 26; a control unit 27; a registration provider information storing unit 28; and a setting information storing unit 29.
The IP communication unit 22, the card reading unit 23, the mobile station device information storing unit 24, the operation input unit 25, and the display unit 26 correspond to the IP communication unit 12, the card reading unit 13, the mobile station device information storing unit 14, the operation input unit 15, and the display unit 16, which are shown in FIG. 1, respectively. Explanations of these elements are omitted here.
The LTE femtocell communication unit 21 corresponds to the LTE femtocell communication unit 11 shown in FIG. 1. However, the LTE femtocell communication unit 21 differs from the LTE femtocell communication unit 11 in that the LTE femtocell communication unit 21 can set and change a frequency band to be used for wireless communication and contents of control channels. In a state in which the femtocell base station device 2 is not being used, the LTE femtocell communication unit 21 does not perform transmission, including transmission of a synchronization channel, a broadcast channel, and the like. The control unit 27 controls each of the units. The registration provider information storing unit 28 stores registration provider information of one provider. The registration provider information includes an MCC and an MNC, which are informations identifying a provider as will be explained later. In other words, the registration provider information storing unit 28 (provider identification information storing unit) stores the MCC and the MNC (provider identification informations). In the state in which the femtocell base station device 2 is not being used, the registration provider information storing unit 28 is in the initial state, and stores no registration provider information. The registration provider information will be explained later. The setting information storing unit 29 stores setting parameters for the LTE femtocell communication unit 21.

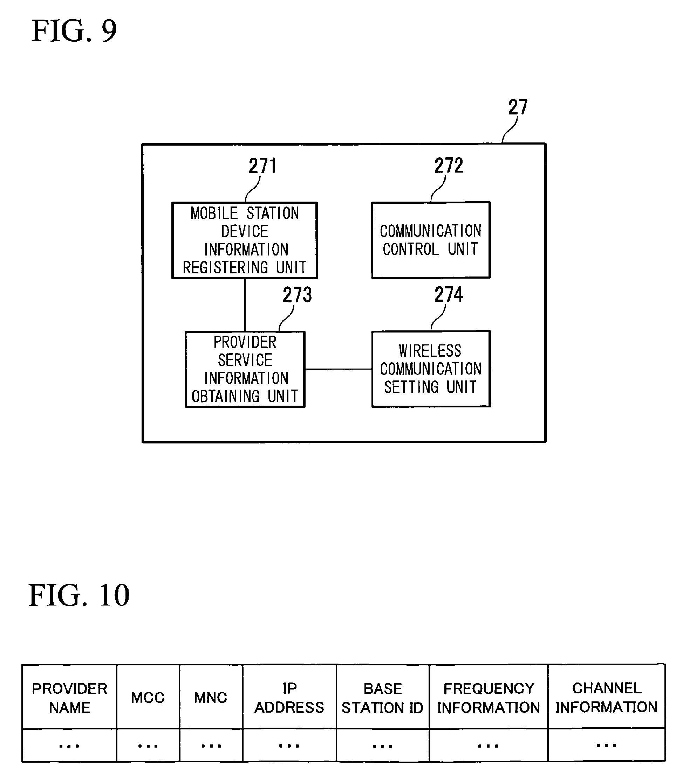

FIG. 9 is a schematic configuration diagram illustrating a configuration of the control unit 27.
In FIG. 9, the control unit 27 includes: a mobile station device information registering unit 271 (recoding medium identification information registering unit); a communication control unit 272; a provider service information obtaining unit 273; and a wireless communication setting unit 274.
The mobile station device information registering unit 271 and the communication control unit 272 respectively correspond to the mobile station device information registering unit 171 and the communication control unit 172, which are shown in FIG. 2. Explanations thereof are omitted here. The provider service information obtaining unit 273 obtains a registration provider information from a provider service information server or a provider service information storing unit which will be explained later, and stores the obtained information in the registration provider information storing unit 28. The provider service information obtaining unit 273 determines whether or not the femtocell base station device 2 is operable according to the registration provider information. The wireless communication setting unit 274 performs a setting of the LTE femtocell communication unit 21.

FIG. 10 is a data configuration diagram illustrating registration provider informations stored by the registration provider information storing unit 28. The registration provider information is information indicating a frequency that the femtocell base station device 2 can use, a base station ID, or the like. Here, the base station ID is an identification information for a mobile station device to identify a base station. Each provider defines one registration provider information. The registration provider information storing unit 28 stores one registration provider information.
In FIG. 10, the provider name is the name of the provider having defined the registration provider information. The MCC and the MNC are the same as those shown in FIG. 4. The IP address is an IP address for accessing a server of the provider. The femtocell base station device 2 accesses the provider server using this IP address, thereby accessing the provider core network through the provider server. The base station ID is a base station ID that the femtocell base station device 2 can use. The frequency information is information concerning the frequency that the femtocell base station device 2 can use. The channel information is information related to a communication scheme that the femtocell base station device can use, such as a coding rate that can be used when packet communication is performed, or the packet size. As will be explained later, setting parameters for the LTE femtocell communication unit 21 are determined from the base station ID, the frequency information, and the channel information. In other words, the base station ID, the frequency information, and the channel information are informations including the setting parameters for the LTE femtocell communication unit 21.
The registration provider information may include information other than the aforementioned informations, such as information concerning services that the femtocell base station device 2 can use, or the packet communication speed (bearer information). Then, the registration provider information storing unit 28 may store a registration provider information including these informations.

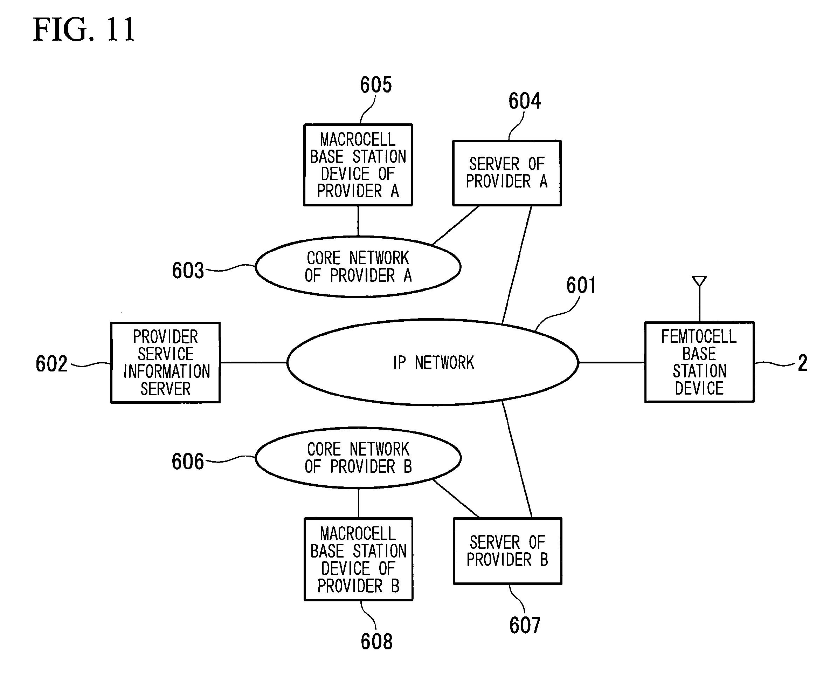

FIG. 11 is a schematic diagram illustrating the connection relationship between an IP network accessed by the femtocell base station device 2 and a provider core network. In FIG. 11, the IP network 601 is connected to the femtocell base station device 2, multiple provider core networks (the core network 603 of the provider A and the core network 606 of the provider B), and a provider service information server 602.
The core network of the provider A and the core network of the provider B are core networks owned by a wireless communication provider A and a core network owned by a wireless communication provider B, respectively, and provide LTE cellular phone services. The server 604 of the provider A and the macrocell base station device 605 of the provider A are connected to the core network 603 of the provider A. The server 607 of the provider B and the macrocell base station device 608 of the provider B are connected to the core network 606 of the provider B. Using an IP address included in the registration provider information, the femtocell base station device 2 accesses the provider core network through the provider server (the server 604 of the provider A or the server 607 of the provider B).
The provider service information server 602 stores a provider service information. The provider service information is data in table format, each row of which includes a registration provider information of a provider. The provider service information can be searched using the MCC and the MNC as main keys. The provider service information stored by the provider service information server 602 is updated to a latest information by a provider, or a sales company, a public institution, or the like of the femtocell base station device. The femtocell base station device 2 previously stores the IP address of the provider service information server 602. The femtocell base station device 2 can communicate with the provider service information server 602 through the IP communication unit 22. Additionally, the control unit 27 determines whether or not the femtocell base station device 2 is operable according to the registration provider information that the IP communication unit 22 receives from the provider service information server 602. For example, if a frequency that can be set to the femtocell base station device 2 is not included in the frequency which can be used by a femtocell and is set to the registration provider information, the control unit 27 determines that the femtocell base station device 2 is not operable according to the registration provider information.
The macrocell base station device 605 of the provider A and the macrocell base station device B of the provider B are base station devices installed by providers. If the femtocell base station device 2 is not available, a mobile station device accesses the macrocell base station device.

If the femtocell base station device 2 is not being used, the registration provider information storing unit 28 (shown in FIG. 8) is in the initial state, no registration provider information is stored. Additionally, the LTE femtocell communication unit 21 is also in the initial state, and does not perform any transmission including transmission of a synchronization channel, a broadcast channel, and the like. To initiate the use of the femtocell base station device 2, a UIM card is removed from the mobile station device and inserted into the UIM card slot of the femtocell base station device 2 (shown in FIG. 5), and then the registration start button is held down. When the registration start button is held down, the control unit 27 confirms whether or not a UIM card is inserted. If a UIM card is not inserted, the display unit 26 displays a message indicating that a UIM card is not inserted. The femtocell base station device 2 may include a speaker, and output an audio message or beeping sound indicating that a UIM card is not inserted. If a UIM card is inserted, the control unit 27 reads a mobile station device information from the UIM card. The IMSI included in the mobile station device information includes the MCC and the MNC of the provider having issued the UIM card, and the identification number MSIN assigned to each UIM card. The control unit 27 determines whether or not the MCC and the MNC match the MCC and the MNC which are stored in the registration provider information storing unit 28. Since no registration provider information is stored in the initial state, the control unit 27 determines that there is no registration. If no registration provider information is registered, the control unit 27 transmits, through the IP communication unit 22 and the IP network, the MCC and the MNC to the provider service information server 602. Then, the control unit 27 obtains a registration provider information of the provider associated with the transmitted MCC and MNC. The femtocell base station device 2 may include a provider service information storing unit, and previously store a provider service information.

If there is no registration provider information associated with the transmitted MCC and MNC in the provider service information, the control unit 27 determines that the femtocell base station device 2 cannot be used according to the inserted UIM card. In this case, the display unit 26 displays a warning indicating that the femtocell base station device 2 cannot be used. The femtocell base station device 2 may include a speaker, and warn by sound. If there is a registration provider information associated with the transmitted MCC an MNC, the IP communication unit 22 receives the registration provider information. The control unit 27 determines based on the registration provider information whether or not the femtocell base station device is operable as a femtocell base station device of the provider. For example, if the femtocell base station device 2 is not compatible with the frequency specified by the registration provider information, the control unit 27 warns that the femtocell base station device 2 cannot be used. If it is determined that the femtocell base station device 2 is operable, the control unit 27 registers the registration provider information to the registration provider information storing unit. The card reading unit 23 reads, from the inserted UIM card, mobile station device informations, such as the IMSI, the TMSI, the ICCID, and the MSISDN. Then, the card reading unit 23 registers the read informations to the mobile station device information storing unit 24 through the control unit 27.

Then, the control unit 27 performs a setting of the LTE femtocell communication unit 21. After the setting is completed, the LTE setting information unit 21 initiates, using the set frequency and the base station ID, transmission of an LTE synchronization channel, a broadcast channel, a control channel, and the like, according to a channel information. Additionally, the femtocell base station device 2 accesses the provider core network through the IP network, and reports that installation of the femtocell base station device is completed. The provider performs, if any, a process required for registration of the femtocell base station device 2, and reports to the femtocell base station device 2 that the registration is completed. The process required for registration of the femtocell base station device 2 includes registration of the frequency used by the femtocell base station device 2 and the base station device ID, registration of a mobile station device allowed to access the femtocell base station device 2, and the like. Upon receiving the report that the registration is completed, the display unit 26 displays a message indicating that the installation of the femtocell base station device 2 is completed. The femtocell base station device 2 may include a speaker or an LED (Light Emitting Diode), and report by making a beeping sound or lighting of the LED that the installation is completed.
After the installation is completed, the mobile station device attached with the UIM card registered to the femtocell base station device 2 is activated. Then, the activated mobile station device detects the femtocell base station device 2 and performs position registration to the detected femtocell base station device 2. The mobile station device information of this mobile station device matches the mobile station device information stored in the mobile station device information storing unit 24. Accordingly, the mobile station device can perform position registration to the femtocell base station device 2, and thereafter can use the femtocell base station device 2.

If the UIM card is inserted while the femtocell is in operation, and the registration start button (the button 505 shown in FIG.5) is held down, the card reading unit 23 reads a mobile station device information from the inserted UIM card. In other words, the card reading unit 23 (reading unit) reads, from the UIM card (recoding medium), the MCC and the MNC (provider identification informations) included in the mobile station device information. The control unit 27 determines whether or not the MCC and the MNC match the MCC and the MNC which are stored in the registration provider information storing unit 18. If these items match, the control unit 27 performs registration of the mobile station device information. Thus, mobile station device informations, such as the IMSI and TMSI which are registered to the UIM card, the identification number ICCID of the UIM card, and the telephone number MSISDN, are registered. Here, the frequency used by the femtocell base station device, the base station ID, and the like, may be written to the UIM card. If registration to the core network is necessary, the control unit 27 accesses the provider core network through the IP network, and performs registration. After the process is completed, the display unit 26 reports that the registration is completed. Here, the femtocell base station device 2 may include a speaker, and report by sound or the like that the registration is completed. Thereafter, the mobile station device with this UIM card inserted can use the femtocell base station device 2.

If the MCC and the MNC which are read from the UIM card differ from the MCC and the MNC which are stored in the registration provider information storing unit 28, the display unit 26 warns that the UIM card differing from the provider set to the femtocell base station device 2 is inserted. Additionally, the display unit 26 displays a message requesting a selection of whether or not to change the setting to a setting of a new provider. If an option not to perform a setting of a new provider is selected, the display unit 26 warns that the femtocell base station device cannot be used. Here, the femtocell base station device 2 may include a speaker or an LED, and warn by a buzzer or lighting of the LED. If an option to perform a setting of a new provider is selected, the femtocell base station device 2 requests, through the IP network, the currently-registered provider core network to delete the registration of the femtocell base station device. After the deletion of the registration is completed, the femtocell base station device 2 receives a report that the deletion of the registration has completed. The selection of whether or not to change the setting to a setting of a new provider is performed by, for example, using the registration start button 505 and the selection button 507. The display unit 26 displays the message requesting a selection of whether or not to change the setting to a setting of a new provider, and an option to select. If the selection button 507 is held down, the display unit 26 switches the display of the option to select and the display of the option not to select. If the registration start button 505 is held down while the option to select is displayed, the option to perform a setting of a new provider is selected. If the registration start button 505 is held down while an option not to select is displayed, the option not to perform a setting of a new provider is selected. Alternatively, the femtocell base station device 1 may be newly provided with a selection button indicating an option is to be selected, and a non-selection button indicating that an option is not to be selected.
Upon receiving the report that deletion of registration is completed, the femtocell base station device 2 initializes the registration provider information storing unit 28, and enters the non-registration state. Hereinafter, the femtocell base station device 2 performs registration and setting processes by a similar procedure to when registration and setting are performed from the aforementioned state in which the femtocell base station device is not being used.

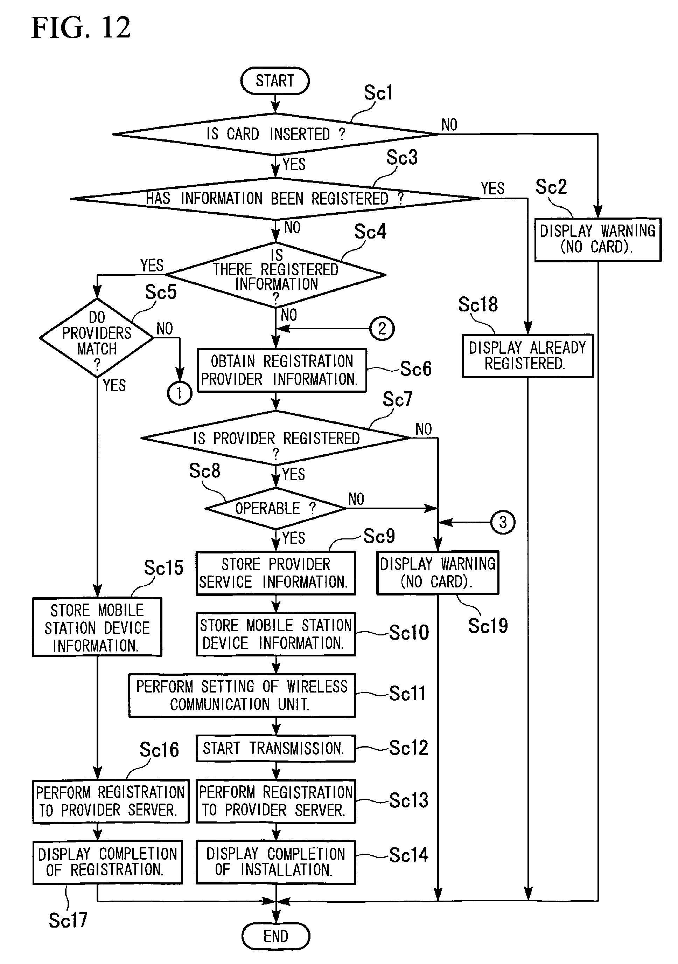

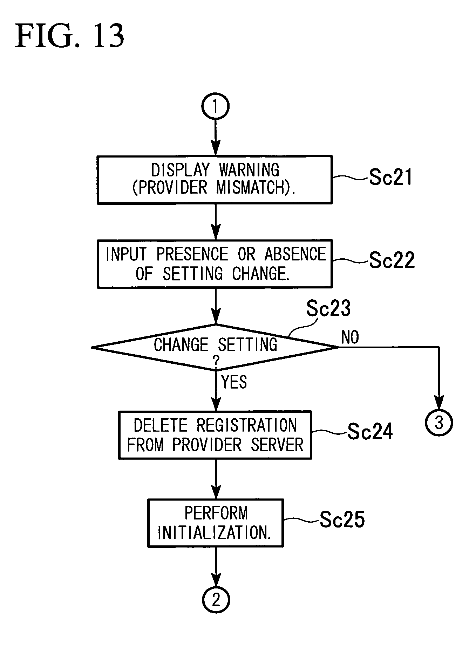

FIGS. 12 and 13 are flowcharts illustrating a procedure for the femtocell base station device 2 to register a mobile station device information and a registration provider information. When a UIM card is inserted into the UIM card slot, and the registration start button is held down, the femtocell base station device 2 initiates registration of a mobile station device information and a registration provider information.
In step Sc1, the card reading unit 23 determines whether or not a UIM card is inserted. If a UIM card is not inserted (step Sc1: NO), the femtocell base station device 2 proceeds to step Sc2. If a UIM card is inserted (step Sc1: YES), the femtocell base station device 2 proceeds to step Sc3. In step Sc2, the display unit 26 displays a warning indicating that a card is not inserted. Thereafter, the femtocell base station device 1 terminates the registration process.
In step Sc3, the control unit 27 determines whether or not the mobile station device information recorded in the UIM card has been registered to the mobile station device information storing unit 24. If the mobile station device information has been registered (step Sc3: YES), the femtocell base station 2 proceeds to step Sc18. If the mobile station device information has not been registered (step Sc3: NO), the femtocell base station 2 proceeds to step Sc4. In step Sc4, the control unit 27 determines whether or not a registration provider information has been registered in the registration provider information storing unit 28. If registration provider information has been registered in the registration provider information storing unit 28 (step Sc4: YES), the femtocell base station 2 proceeds to step Sc5. If registration provider information has not been registered in the registration provider information storing unit 28 (step Sc4: NO), the femtocell base station 2 proceeds to step Sc6. In step Sc5, the control unit 27 determines whether or not the MCC and the MNC which are stored in the UIM card match MCC and MNC which are stored in the registration provider information storing unit 28. If the MCC and the MNC match (step Sc5: YES), the femtocell base station 2 proceeds to step Sc15. If the MCC and the MNC do not match (step Sc5: NO), the femtocell base station 2 proceeds to step Sc21 shown in FIG. 13.

In step Sc6, the control unit 27 transmits the MCC and the MNC to the provider service information server 602 through the IP communication unit 22 and the IP network 601. Then, the control unit 27 receives registration provider information associated with the MCC and the MNC, or information indicating that the associated registration provider information has not been registered. Here, as explained above, the femtocell base station device 2 may include a provider service information storing unit (not shown) that previously stores a provider service information, so that the control unit 27 searches a provider service information using the MCC and the MNC as keys and thereby obtains the registration provider information. The registration provider information includes setting parameters for the IP communication unit 22. In other words, the control unit 27 (provider service information obtaining unit) checks the MCC and the MNC (provider identification informations) which are stored in the registration provider information storing unit 28 against the MCC and the MNC (provider identification informations) obtained from the card reading unit 23 (reading unit). According to a result of the comparison, the control unit 27 obtains a registration provider information (including setting parameters) associated with the MCC and the MNC which are obtained from the card reading unit 23 (reading unit), from a provider service information storing unit (not shown) in the wireless communication device, or from the provider service information server (external server connected to the communication network) through the IP communication unit 22 (the network communication unit).
In step Sc7, the control unit 27 determines whether or not the associated registration provider information is registered to the provider service information server 602. If the associated registration provider information is registered (step Sc7: YES), the femtocell base station device 2 proceeds to step Sc8. If the associated registration provider information is not registered (step Sc7: NO), the femtocell base station device 2 proceeds to step Sc19. In step Sc8, the control unit 27 determines whether or not the femtocell base station device 2 is operable according to the contents of the registration provider information received from the provider service information server 602. If the femtocell base station device 2 is operable (step Sc8: YES), the femtocell base station device 2 proceeds to step Sc9. If the femtocell base station device 2 is not operable (step Sc8: NO), the femtocell base station device 2 proceeds to step Sc19.

In step Sc9, the control unit 27 stores the registration provider information received from the registration service information server 602 in the registration provider information storing unit 28. In other words, the control unit 27 (wireless communication setting unit) writes, to the registration provider information storing unit 28, the MCC and the MNC (provider identification informations) which are included in the registration provider information obtained from the card reading unit 23 (reading unit). In step Sc10, the control unit 27 reads a mobile station device information from the UIM card, and writes the read information to the mobile station device information storing unit 24. In step Sc11, the control unit 27 reads, from the registration provider information storing unit 28, setting parameters, such as the base station ID, a frequency information, and channel information, and writes the read informations to the setting information storing unit 29. Additionally, the control unit 27 performs a setting of the LTE femtocell base station device 21 based on the setting parameters. In other words, the control unit 27 (wireless communication setting unit) performs the setting of the LTE femtocell communication unit 21 (wireless communication unit) based on the obtained setting parameters. Thus, the LTE femtocell communication unit 21 becomes accessible. Upon receiving an access request from a mobile station device, the LTE femtocell communication unit 21 communicates with the mobile station device. The details of the setting of the LTE femtocell communication unit 21 will be explained later.

In step Sc12, the LTE femtocell communication unit 21 initiates transmission of an LTE synchronization channel, a broadcast channel, a control channel, and the like. In step Sc13, the control unit 27 reads an access destination IP address of the provider server from the registration provider information storing unit 28. Then, the IP communication unit 22 accesses the provider server, thereby is connected to the provider core network. Here, as explained in step Sc6, the registration provider information stored in the registration provider information storing unit 28 is the information obtained from the wireless communication device or an external server. In other words, the control unit 27 (network communication unit) obtains, from the wireless communication device or an external server, the access destination IP address of the provider server (provider core network access destination information that is an address information for accessing the provider core network), according to the MCC and the MNC (provider identification informations) from the card reading unit 23 (reading unit). Then, the control unit 27 accesses the provider core network according to the access destination IP address of the provider server (provider core network access destination information).

The control unit 27 registers, to the provider server, information related to the femtocell base station device 2, such as an ID and a frequency used by the femtocell base station device 2, and information of a mobile station device to be newly registered. In step Sc14, the display unit 26 displays that the setting of the femtocell base station device 2 and the registration of the mobile station device information are completed. Thereafter, the femtocell base station device 2 terminates the registration process.
In the aforementioned step Sc19, the display unit 26 displays a warning indicating that the mobile station device cannot use the femtocell base station device 2. Thereafter, the femtocell base station device 2 terminates the registration process. In step Sc15, the control unit 27 reads a mobile station device information from the UIM card, and writes the read information to the mobile station device information storing unit 24. In step Sc16, the control unit 27 registers, to the provider server, the informations of a mobile station device to be newly registered. Step Sc17, the display unit 26 displays that the registration of the mobile station device information is completed. Thereafter, the femtocell base station device 2 terminates the registration process. In step Sc18, the display unit 26 displays that the mobile station device information has been registered. Thereafter, the femtocell base station device 2 terminates the registration process.

In step Sc21 shown in FIG. 13, the display unit 26 displays a warning that the provider registered to the femtocell base station device 2 differs from the provider registered to the UIM card. In step Sc22, the operation input unit 25 receives an operation indicating whether or not to change the setting of the femtocell base station device 2. Then, the operation input unit 25 outputs information indicating the presence or absence of the setting change to the control unit 27. In step Sc23, the control unit 27 determines whether or not to change the setting, based on the information received from the operation input unit 25. If the setting is to be changed (step Sc23: YES), the femtocell base station device 2 proceeds to step Sc24. If the setting is not to be changed (step Sc23: NO), the femtocell base station device 2 proceeds to step Sc19 shown in FIG. 12. In step Sc24, the control unit 27 transmits a signal for requesting the provider server to delete the information related to the femtocell base station device 2, and receives from the provider server, a signal indicating that the deletion has been completed. In step Sc25, the information stored in the registration provider information storing unit 28 and the information stored in the mobile station device information storing unit 24 are deleted (initialized), and the femtocell base station device 2 proceeds to step Sc6 shown in FIG. 12.

Then, a setting of the LTE femtocell communication unit 21 performed by the control unit 27 is explained. The control unit 27 performs a setting of the LTE femtocell communication unit 21 based on the registration provider information received from the provider service information server 602. It can be considered that multiple frequencies or the like that can be used by the femtocell base station device 2 are included in the registration provider information received from the provider service information server 602. In the case of the LTE, multiple frequency bands are available. Additionally, it can be considered that each frequency band is divided and assigned to multiple providers. The provider service information includes a frequency band that each provider assigns to a femtocell in this frequency (a portion of the frequency band divided in the frequency direction). One frequency band is set in some cases, and multiple frequency bands are set in another case.
Additionally, it can be considered that the base station ID is managed for each provider, and the number of available base station IDs is limited. The femtocell base station device 2 includes hardware that can be compatible with the frequency band, the base station ID, the transmission power, and the like, which are assigned to each provider, so that multiple providers can use the femtocell base station device 2. Parameters for the LTE femtocell communication unit are determined and set according to provider information, thereby the femtocell base station device 2 can be compatible with the provider. Thus, the registration provider information is information including the setting parameters for the LTE femtocell communication unit 21.

If the registration provider information received from the provider service information server 602 includes some options as explained above, the femtocell base station device 2 accesses a provider server using the IP address of the provider included in the registration provider information, and requests the provider server to transmit setting parameters. The femtocell base station device 2 transmits a setting information request signal including an installation position information of the femtocell base station device previously set by a user, and thereby requests the provider server to transmit the setting parameters. The provider server determines a frequency and a base station ID to be assigned to the femtocell base station device 2, based on the received installation position information. Then, the provider server transmits the determined items to the femtocell base station device 2. The installation position information of the femtocell base station device may be the telephone number for access to a broadband. Alternatively, the femtocell base station device 2 may have a GPS (Global Positioning System) function to detect the installation position.

If there is no need to use the frequency band or the base station ID which are specified by the provider, the femtocell base station device 2 may set the parameters. In this case, the femtocell base station device 2 further has a function of receiving a signal transmitted from another base station and measuring the level of the received signal, the frequency thereof, the base station ID of the transmission source. The femtocell base station device 2 monitors electric wave environments with respect to the frequency band specified as available by the registration provider information, and thereby measures the level of the received signal, the frequency thereof, the base station ID of the transmission source. If an ID to be used by another base station device is found as a result of the measurement, the femtocell base station device 2 selects a base station ID from among base station IDs other than the found ID, in order to prevent interference. Additionally, if several frequency bands are available, the femtocell base station device 2 selects such a frequency band that interference from another base station is the smallest. Thus, the femtocell base station device 2 selects the optimal frequency and base station ID from the results of the measurement. If there are multiple available base station IDs, the femtocell base station device 2 performs selection randomly. Additionally, if all the available base station IDs are being used by other base stations, the femtocell base station device 2 selects such a base station ID that the level of the received signal is the smallest.

The control unit 27 writes the frequency and the base station ID determined in the above manner to the setting information storing unit 29. Additionally, the control unit 27 writes, to the setting information storing unit 29, an available channel information included in the registration provider information (such as the configuration of a broadcast channel, information reported by a broadcast channel, a coding rate that can be used for packet communication, the packet size, and the like). The control unit 27 performs a setting of the LTE femtocell communication unit 21 based on the setting parameters written to the setting information storing unit 29. After the setting is completed, the LTE femtocell communication unit 21 initiates transmission of an LTE synchronization channel, a broadcast channel, a control channel, and the like. When the LTE femtocell communication unit 21 initiates the transmission, the control unit 27 accesses the provider sever through the IP communication unit 22 and the IP network 601, and reports that the installation of the femtocell base station device is completed. The control unit 27 transmits, to the provider server, a position information of the base station, the frequency in use, the base station ID in use, and information concerning the mobile station device to be allowed to use the base station. The provider server registers the received informations, and reports to the femtocell base station device 2 that the registration is completed.
In parallel with the operation of the registration to the provider server, the control unit 27 may write, to the UIM card, information concerning the base station ID, the frequency, and the like. The mobile station device preferentially tries to access the femtocell base station device 2 by using these informations when performing position registration and cell search, thereby expecting a faster connection.

As explained above, the UIM card is removed from the mobile station device and inserted into the femtocell base station device, and thus a setting of the femtocell base station device 2 is performed, thereby enabling the setting by a simple operation and preventing setting errors. Additionally, the setting of the femtocell base station device 2 is changed so that the femtocell base station device 2 can be compatible with a different provider. Accordingly, even if a user changes a provider to be used, the femtocell base station device 2 can be continuously used. Therefore, the femtocell base station device having been used does not become wasteful even if the provider to be used is changed, thereby enabling omission of a time consuming resetting of the femtocell base station device.

### (Third Embodiment)

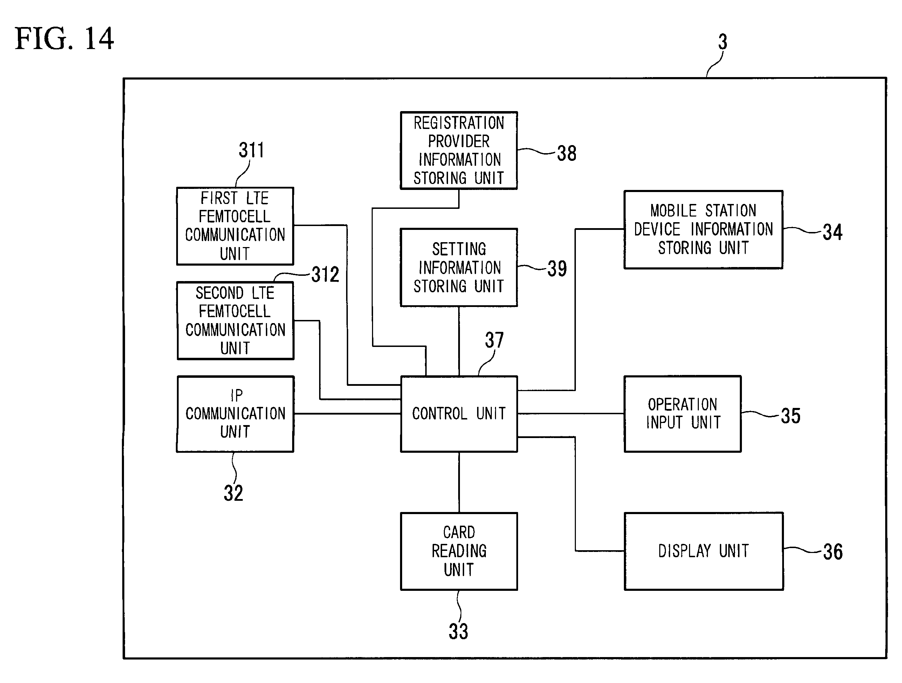

Hereinafter, a third embodiment of the present invention is explained. FIG. 14 is a schematic block diagram illustrating a configuration of a femtocell base station device 3 according to the third embodiment of the present invention. In FIG. 14, the femtocell base station device 3 includes: a first LTE femtocell communication unit 311; a second LTE femtocell communication unit 312; an IP communication unit 32; a card reading unit 33; a mobile station device information storing unit 34; an operation input unit 35; a display unit 36; a control unit 37; a registration provider information storing unit 38; and a setting information storing unit 39. In other words, the femtocell base station device 3 includes multiple LTE femtocell communication units 311 and 312 (wireless communication units).
The IP communication unit 32, the card reading unit 33, the mobile station device information storing unit 34, the operation input unit 35, and the display unit 36 correspond to the IP communication unit 22, the card reading unit 23, the mobile station device information storing unit 24, the operation input unit 25, and the display unit 26, which are shown in FIG. 8, respectively. Explanations of these units are omitted here. The control unit 37 controls each of the units. The control unit 37 corresponds to the control unit 27 shown in FIG. 9. However, the control unit 37 differs from the control unit 27 shown in FIG. 9 in that the control unit 37 performs settings of the femtocell communication units 311 and 312 to be compatible with multiple providers. The first LTE femtocell communication unit 311 and the second LTE femtocell communication unit 312 correspond to the LTE femtocell communication unit 21 shown in FIG. 8. The registration provider information storing unit 38 corresponds to the registration provider information storing unit 28 shown in FIG. 8. However, the registration provider information storing unit 38 can store two registration provider informations. In a state in which the femtocell base station device 3 is not being used, no registration provider information is registered to the registration provider information storing unit 38. The setting information storing unit 38 corresponds to the setting information storing unit 29 shown in FIG. 8. However, the setting information storing unit 39 stores setting information of the first LTE femtocell communication unit 311 and a setting information of the second LTE femtocell communication unit 312.

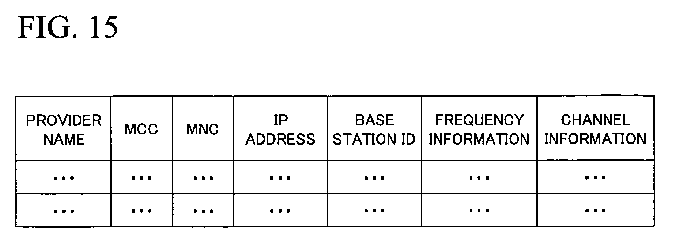

FIG. 15 is a data configuration diagram illustrating a configuration of registration provider information stored by the registration provider information storing unit 38. The registration provider information 38 stores two registration provider informations, which are a first registration provider information associated with the first LTE femtocell communication unit 311 and a second registration provider information associated with the second LTE femtocell communication unit 312. In other words, the registration provider information storing unit 28 associates each of multiple sets of MCC and MNC (multiple provider identification informations) with one of the LTE femtocell communication units 311 and 312 (wireless communication units), and stores the associated items. The items to be stored as the registration provider informations are similar to those shown in FIG. 10. The registration provider information storing unit 38 stores two registration provider informations in table format. The first row data corresponds to the first registration provider information. The second row data corresponds to the second registration provider information. Each of the registration provider informations stored by the registration provider information storing unit 38 can be searched using the MCC and the MNC as main keys.

If a UIM card is inserted into the UIM card slot and the registration start button is held down, the femtocell base station device 3 initiates registration of a mobile station device information and a registration provider information.
The femtocell base station device 3 transmits the MCC and the MNC that the card reading unit 33 reads from the UIM card, to the provider service information server through the IP network, and then receives a registration provider information. Here, the femtocell base station device 3 may include a provider service information storing unit so as to previously store the provider service information.
If the femtocell base station device is operable based on the received registration provider information, the control unit 37 stores the registration provider information in the registration provider information storing unit 38. The control unit 37 performs a setting of the first LTE femtocell communication unit 31 based on the registration provider information stored in the registration provider information storing unit 38. Thereby, the first LTE femtocell communication unit 31 operates as the LTE femtocell communication unit compatible with the mobile station device of the provider (provider 1) having issued the UIM card. After the setting of the first LTE femtocell communication unit 311 is completed, the femtocell base station device 3 requests the core network of the provider 1 to register the femtocell base station device. After the core network completes the registration process of the femtocell base station device, the femtocell base station device 3 receives a registration completion report. The femtocell base station device receiving the registration completion report displays, on the display unit 36, a message indicating that the setting is completed. Alternatively, the femtocell base station device 3 may include an LED or speaker so as to report the message by lighting the LED or making a beeping sound.

After the setting is completed, the first LTE femtocell base station device 311 becomes accessible to the mobile station device. When the mobile station device, into which the UIM card registered to the mobile station device information storing unit 34 is inserted, detects the femtocell base station device 3, the mobile station device performs processes for camping on the area served by the femtocell base station device 3, such as position registration to the femtocell base station device 3, and update of a routing area. If the mobile station device requesting these processes is identical to the mobile station device stored in the mobile station device information storing unit 34, the femtocell base station device 3 allows the processes. Otherwise, the femtocell base station device 3 rejects the processes. The mobile station device registered to mobile station device information storing unit 34 camps on the area served by the femtocell base station device 3. Thereafter, when performing communication, such as a voice call, a videophone call, packet communication, or transmission and reception of mails, the mobile station device accesses the first core network of the provider 1 through the first LTE femtocell communication unit 311. The femtocell base station device 3 transmits and receives, to and from the core network of the provider 1 through the IP communication unit 32, data obtained from the mobile station device connected to the first LTE femtocell communication unit 311 or data to be transmitted to the mobile station device. When the mobile station device moves to an area in which the mobile station device cannot communicate with the femtocell base station device 3, the mobile station device performs processes, such as cell reselection for a macrocell base station of the provider 1, and update of a routing area, and thus operates as a cellular phone based on the communication scheme defined by the LTE.

After the setting of the first LTE femtocell communication unit 311 is completed, when a UIM card issued by a provider (provider 2) different from the provider 1 is inserted and the registration start button is held down, the control unit 37 performs a setting of the second femtocell communication unit 312, a registration process of a mobile station device information, and the like, since a row of the registration provider information storing unit 38 which is associated with the second LTE femtocell communication unit 312, i.e., the second row has no registration. The control unit 37 performs similar processes to the registration of the first LTE femtocell 311, except for using the second row that is a region for the second LTE femtocell 312 in the registration provider information storing unit 38. Thereby, the setting of the second LTE femtocell communication unit 312 is compatible with the mobile station device for the provider 2.
By the above settings, the first LTE femtocell communication unit 311 performs communication using a frequency domain and a base station ID which conform to the service contents of the provider 1. Meanwhile, the second LTE femtocell communication unit 312 performs communication using a frequency domain and a base station ID which conform to service contents of the provider 2. Report informations transmitted by these communication units include the MCC and the MNC. The MCC and the MNC of the provider 1 is reported from the first LTE femtocell communication unit 311. The MCC and the MNC of the provider 2 is reported from the second LTE femtocell communication unit 312.

In the above manner, the mobile station device, into which the UIM card issued by the provider 1 and registered to the mobile station device information is inserted, becomes accessible to the core network of the provider 1 through the first LTE femtocell communication unit 311. Similarly, the mobile station device, into which the UIM card issued by the provider 2 and registered to the mobile station device information is inserted, becomes accessible to the core network of the provider 2 through the second LTE femtocell communication unit 312. Thus, the mobile station devices, through the femtocell base station device 3, can be provided with services, such as a voice call, a videophone call, browsing, and transmission and reception of mails.
The femtocell base station device 3 accesses the provider core network according to whether the first LTE femtocell communication unit 311 or the second LTE femtocell communication unit 312 receives wireless communication from the mobile station device. If the first LTE femtocell communication unit 311 receives wireless communication, the control unit 37 reads an IP address from the row (first row) associated with the first LTE femtocell communication unit 311, and outputs the IP address to the IP communication unit 32. Then, the IP communication unit 32 accesses the provider core network according to the input IP address. If the second LTE femtocell communication unit 312 receives wireless communication, the control unit 37 reads an IP address from the row (second row) associated with the second LTE femtocell communication unit 312, and outputs the IP address to the IP communication unit 32. Then, the IP communication unit 32 accesses the provider core network according to the input IP address. Thus, the LTE femtocell communication unit is connected to the provider core network associated with the mobile station device.
Here, the femtocell base station device 3 may include the same number of IP communication units as that of the femtocell communication units. In this case, connection to multiple provider core networks can be established. Accordingly, there is no need to switch the access destination provider core network according to which LTE femtocell communication unit receives wireless communication. At the time of a setting of the LTE femtocell communication, the control unit 37 reads an IP address from the row associated with the LTE femtocell communication unit, and outputs the IP address to the IP communication unit associated with the LTE femtocell communication unit. The IP communication unit accesses the provider core network according to the input IP address.

If a UIM card is inserted into the UIM card slot and the registration start button is held down while both the first LTE femtocell communication unit 311 and the second LTE femtocell communication unit 312 are set, the control unit 37 determines whether or not the mobile station device is a mobile station device stored in the mobile station device information storing unit 34. If the mobile station device has been registered, the display unit 36 displays that the mobile station device has been registered. Here, another means, such as lighting of an LED or making a sound, may be used to report that the mobile station device has been registered. If the mobile station device has not been registered, the control unit 37 confirms, using the MCC and the MNC read from the UIM card, whether or not the provider has been registered to the registration provider information storing unit 38. If the provider has been registered, the mobile station device is registered to the mobile station device information unit. According to need, the control unit 37 accesses the core network of the provider registered to the registration provider information and updates the informations of the mobile station device allowed to access the femtocell base station device 3. After the registration is completed, the display unit 36 displays completion of the registration. Here, lighting of an LED or making a beeping sound may be used to report the completion of the registration. By the above processes, the mobile station device, into which the UIM card is inserted, becomes accessible to the femtocell base station device 3. Thus, the mobile station device can perform a voice call, a videophone call, packet communication, and the like, through the femtocell base station device 3.

If the MCC and the MNC read from the UIM card has not been registered to the registration provider information storing unit 38, it is confirmed whether there is the LTE femtocell communication unit 31 or 32 that is not registered. If there is no LTE femtocell communication unit that is not registered, the display unit 36 reports to a user that it is necessary to delete the currently-registered provider in order to use the mobile station device into which this UIM card is inserted. If the user rejects deletion of the already-registered provider, the display unit 36 displays that the provider of this UIM card cannot be registered, and the registration process ends. If the user allows deletion of the already-registered provider, the display unit 36 displays the already-registered providers, and urges the user to select a provider to be deleted. If a provider to be deleted is selected, the control unit 37 accesses the provider core network through the IP network, and transmits a deletion request. Upon receiving the deletion request, the provider core network deletes the registration of the femtocell base station device 3, and reports to the femtocell base station device 3 that the deletion is completed. Upon receiving the deletion complete report, the femtocell base station device 3 deletes the corresponding registration provider information, the mobile station device information, and the setting information of the LTE femtocell communication unit, and enters the non-registration state. Thereafter, the femtocell base station device 3 performs registration and setting processes in the aforementioned manner. Thus, the femtocell base station device 3 becomes compatible with the provider having issued the UIM card. The mobile station device, into which this UIM card is inserted, can use the femtocell base station device 3.

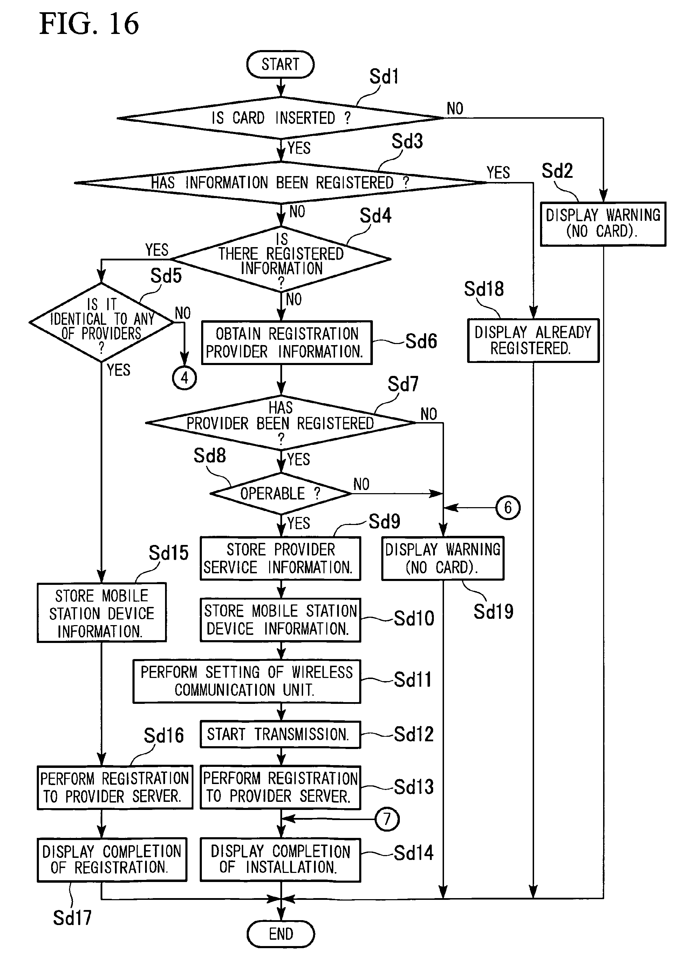

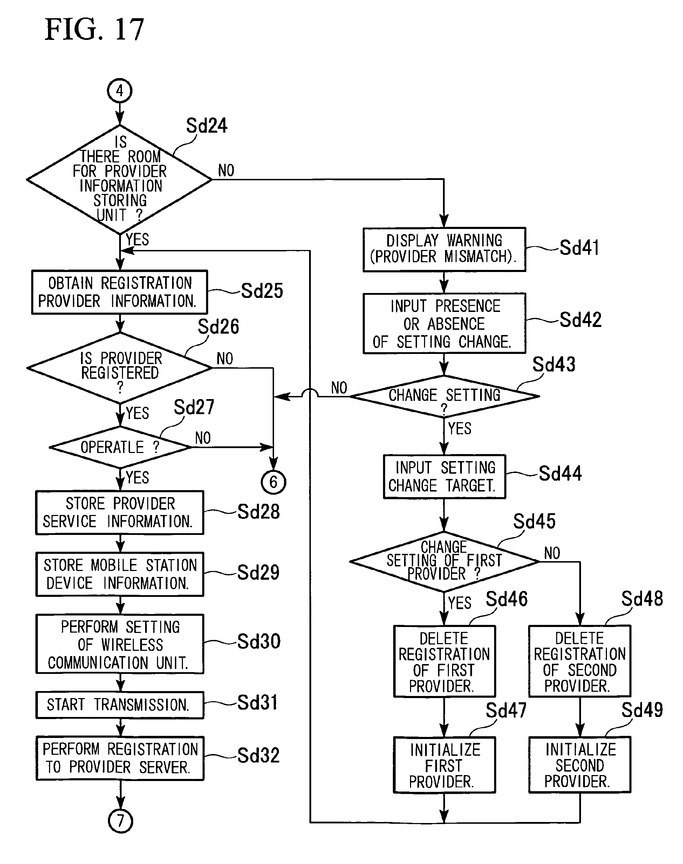

FIGS. 16 and 17 are flowcharts illustrating a procedure for the femtocell base station 3 to register a mobile station device information and a registration provider information.
In FIG. 16, steps Sd1 to Sd3 are the same as the steps Sc1 to Sc3 shown in FIG. 12. In step Sd4, the control unit 37 determines whether or not a registration provider information is registered in the registration provider information storing unit 38. If one or more registration provider informations are registered (step Sd4; YES), the femtocell base station device 3 proceeds to step Sd5. If no registration provider information is registered (step Sd4: NO), the femtocell base station device 3 proceeds to step Sd6. In step Sd5, the control unit 37 determines whether or not the MCC and the MNC recorded in the UIM card are identical to MCC and MNC of any one of the registration provider informations stored in the registration provider information storing unit 38. If the MCC and the MNC are identical to those of any one of the stored registration provider informations (step Sd5: YES), the femtocell base station device 3 proceeds to step Sd15. If the MCC and the MNC are not identical to those of any one of the stored registration provider informations (step Sd5: NO), the femtocell base station device 3 proceeds to step Sd24.
Steps Sd6 to Sd19 are the same as the steps Sc6 to Sc19 shown in FIG. 12. In step Sd10, however, the control unit 37 stores, as the first registration provider information, the registration provider information received from the provider service information server to the registration provider information storing unit 38. Additionally, in step Sd11, the control unit 37 performs a setting of the first LTE femtocell communication unit 311.

In step Sd24 shown in FIG. 17, the control unit 37 determines whether or not there is room for the registration provider information storing unit 38, that is, whether or not one of the first registration provider information and the second registration provider information is not registered. If there is room (step Sd24: YES), the femtocell base station device 3 proceeds to step Sd25. If there is no room (step Sd24: NO), the femtocell base station device 3 proceeds to step Sd41. Steps Sd25 to Sd32 are the same as the steps Sd5 to Sd12 shown in FIG. 16. In step Sd29, however, the control unit 37 stores, in the registration provider information storing unit 38, the registration provider information received from the provider service information server, as one of the first registration provider information and the second registration provider information which is not registered. Additionally, if the first registration provider information is stored in step Sd29, the control unit 37 performs a setting of the first LTE femtocell communication unit 311 in step Sd30. If the second registration provider information is stored in step Sd29, the control unit 37 performs a setting of the second LTE femtocell communication unit 312 in step Sd30. In other words, the control unit 37 (wireless communication setting unit) performs a setting of one of the LTE femtocell communication units 311 and 312 (any one of the wireless communication units) based on the setting parameters included in the obtained registration provider information. Additionally, the control unit 37 deletes, from the registration provider information storing unit 38, the MCC and the MNC (provider identification informations) associated with the LTE femtocell communication unit (wireless communication unit) having been subjected to the setting. Then, the control unit 37 writes the MCC and the MNC (provider identification informations) read by the card reading unit 33 (reading unit) while associating the MCC and the MNC with the LTE femtocell communication unit (wireless communication unit).
Similar to the step Sc6 shown in FIG. 12, in step Sd25, the control unit 38 obtains, through the IP communication unit 32, a registration provider information including the setting parameters for one of the LTE femtocell communication units 311 and 312. In other words, the IP communication unit 32 (network communication unit) obtains the setting parameters if the MCC and the MNC (registration provider informations) read by the card reading unit 33 (reading unit) are not identical to any set of the MCC and the MNC (registration provider informations) stored in the registration provider information storing unit 38.

In step Sd41, the display unit 36 displays a warning indicating that the provider recorded in the UIM card is not identical to the provider stored in the registration provider information storing unit 38. In step Sd42, upon receiving a user operation indicating whether or not to change the setting of one of the first LTE femtocell communication unit 311 and the second LTE femtocell communication unit 312, the operation input unit 35 outputs, to the control unit 37, information indicating whether or not to change the setting. In step Sd43, the control unit 37 determines whether or not to change the setting based on the information indicating whether or not to change the setting, which is received from the operation input unit 35. If the setting is to be changed (step Sd43: YES), the femtocell base station device 3 proceeds to step Sd44. If the setting is not to be changed (step Sd43: NO), the femtocell base station device 3 proceeds to step Sd19.
In step Sd44, the operation input unit 35 receives an input of a user operation indicating which of the first LTE femtocell communication unit 311 and the second LTE femtocell communication unit 312 is to be targeted for the setting change, and outputs information indicating the target for the setting change. In step Sd45, whether or not to change the setting of the first LTE femtocell communication unit 311 is determined based on the information indicating the target for the setting change, which is received from the operation input unit 35. If the setting of the first LTE femtocell communication unit 311 is to be changed (step Sd45: YES), the femtocell base station device 3 proceeds to step Sd46. If the setting of the first LTE femtocell communication unit 311 is not to be changed (step Sd45: NO), in other words, if the setting of the second LTE femtocell communication unit 312 is to be changed, the femtocell base station device 3 proceeds to step Sd48.
In step Sd46, the control unit 37 transmits, to the provider server of the provider indicated by the first registration provider information, a signal that requests a deletion of the information concerning the femtocell base station device 3. Then, the control unit 37 receives, from the provider server, a signal indicating that the deletion is completed. In step Sd47, the control unit 37 deletes one of the mobile station device informations stored in the mobile station device information storing unit 34, which is identical to the provider indicated by the first registration provider information. Then, the control unit 37 deletes the first registration provider information from the registration provider information storing unit 38. Then, the femtocell base station device 3 proceeds to step Sd25. In step Sd48, the control unit 37 transmits, to the provider server of the provider specified by the second registration provider information, a signal that requests a deletion of the information concerning the femtocell base station device 3. Then, the control unit 37 receives, from the provider server, a signal indicating that the deletion is completed. In step Sd48, the control unit 37 deletes one of the mobile station device informations stored in the mobile station device information storing unit 34, which is identical to the provider specified by the second registration provider information. Then, the control unit 37 deletes the second registration provider information from the registration provider information storing unit 38. Then, the femtocell base station device 3 proceeds to step Sd25.

Upon detecting the femtocell base station device 3, the mobile station device, into which the UIM card registered to the mobile station device information unit, performs processes required to camp on the area served by the femtocell base station device 3, such as position registration, cell reselection, and routing area update. Upon receiving a request for these processes from the mobile station device, the femtocell base station device 3 allows the processes if the terminal requesting the processes is the mobile station device registered to the mobile station device information unit. Otherwise, the femtocell base station device 3 rejects these processes. The mobile station device registered to the mobile station device information unit camps on the area served by the femtocell. Thereafter, the mobile station device performs, through the femtocell base station device 3, communication such as a voice call, a videophone call, packet communication, or transmission and reception of mails. If the mobile station device moves to an area in which the mobile station device cannot performs reception from the femtocell, the mobile station device performs such processes as position registration to a macrocell base station of a provider, cell reselection, and routing area update. Thus, the mobile station device operates as a cellular phone based on the communication scheme defined by the LTE.

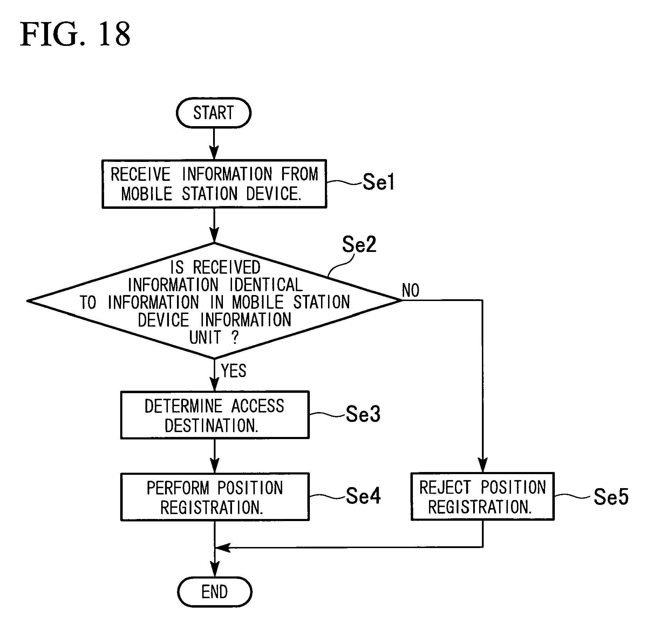

FIG. 18 is a flowchart illustrating operations of the femtocell base station device 3 when receiving a position registration request from the mobile station device. When the first LTE femtocell communication unit 311 or the second LTE femtocell communication unit 312 receives a position registration request from the mobile station device, the femtocell base station device 3 initiates a position registration process. Hereinafter, it is assumed that the n-th LTE femtocell communication unit (n=1 or 2) receives the position registration request from the mobile station device. In step Se1, the n-th LTE femtocell communication units 311 or 312 receives a mobile station device information from the mobile station device. In step Se2, the control unit 37 determines whether or not a mobile station device information matching the mobile station device information received by the n-th LTE femtocell communication units 311 or 312 is stored in the mobile station device information storing unit 34. If there is a matching mobile station device information (step Se2: MATCH), the femtocell base station device 3 proceeds to step Se3. If there is no matching mobile station device information (step Se2: MISMATCH), the femtocell base station device 3 proceeds to step Se5.
In step Se3, the control unit 37 determines, as the access destination, an IP address to be used for access to the core network, which is included in the n-th registration provider information stored in the registration provider information storing unit 48. In step Se4, the IP communication unit 32 transmits a position registration request to the provider core network. Then, a home location register (HLR) connected to the provider core network performs the position registration. The mobile station device, the position registration of which has been performed, can access the provider core network through the femtocell base station device 3, and thereby perform a voice call, a videophone call, packet communication, and the like. Thus, the femtocell base station device 3 terminates the position registration process. In step Se5, the display unit 36 displays that the position registration is rejected. Thereafter, the femtocell base station device 3 terminates the position registration process.

The case in which the LTE femtocell communication units 311 and 312 are compatible with different providers has been explained above. However, the LTE femtocell communication units 311 and 312 may be compatible with the same provider. If the number of mobile station devices to be registered to is limited for each LTE femtocell communication unit, and if a provider to be used provides femtocell services using multiple frequencies, the LTE femtocell communication units are set to the same provider and different frequencies, thereby enabling an increase in the number of terminals to be served by the same provider.
The LTE femtocell communication units 311 and 312 may use a communication scheme other than the LTE, such as LTE-A (Long Term Evolution Advanced) and W-CDMA (Wideband Code Division Multiple Access). Additionally, all the LTE femtocell communication units do not have to use the same communication scheme. Instead, such a configuration that the LTE and the W-CDMA are mixed may be used.

As explained above, the femtocell base station device 3 can be compatible with multiple providers. Accordingly, there is no need to install a femtocell base station device for each provider, thereby reducing installation space and installation costs. For example, when a femtocell base station device is installed in a home, even if all family members do not use the same provider, all the family members can use the femtocell. Similarly, when an individual user owns terminals of multiple providers, the individual user can use the femtocell with respect to multiple providers.

### (Fourth Embodiment)

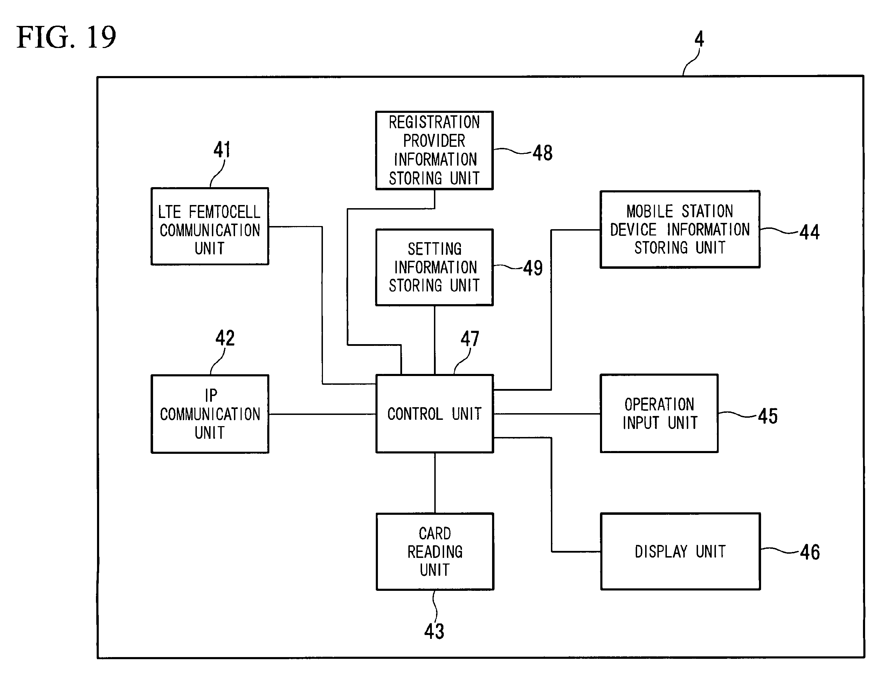

Hereinafter, a fourth embodiment of the present invention is explained. FIG. 19 is a schematic block diagram illustrating a configuration of a femtocell base station device 4 according to the fourth embodiment of the present invention. In FIG. 19, the femtocell base station device 4 includes: an LTE femtocell communication unit 41; an IP communication unit 42; a card reading unit 43; a mobile station device information storing unit 44; an operation input unit 45; a display unit 46; a control unit 47; a registration provider information storing unit 48; and a setting information storing unit 49.
The IP communication unit 42, the card reading unit 43, the mobile station device information storing unit 44, the operation input unit 45, and the display unit 46 respectively correspond to the IP communication unit 32, the card reading unit 33, the mobile station device information storing unit 34, the operation input unit 35, and the display unit 36, which are shown in FIG. 14. Explanations of these units are omitted here.
In the fourth embodiment, as a frequency and a base station device ID which the femtocell base station device can use, a frequency and a base station ID which are common to each provider are defined and registered to the provider service information server 602. Multiple frequencies and base station IDs may be set as long as the frequencies and the base station IDs are used only for the base station device and can be set to the LTE femtocell communication unit 41. The LTE femtocell communication unit 41 corresponds to the LTE femtocell communication unit 21 shown in FIG. 8. However, the LTE femtocell communication unit 41 differs from the LTE femtocell communication unit 21 shown in FIG. 8 in that the LTE femtocell communication unit 41 communicates with mobile station devices of two different providers by using the aforementioned frequency and the base station ID which are received from the provider service information server 602. Here, a modulation scheme to be used for packet communication, and a channel setting such as a coding rate, may differ for each mobile station device. The registration provider information storing unit 48 stores two registration provider informations, similarly to the registration provider information storing unit 38 shown in FIG. 14. However, the registration provider information storing unit 48 stores the same frequency and base station ID which are common to each registration provider information. The setting information storing unit 49 stores two setting parameters, similarly to the setting information storing unit 39 shown in FIG. 14. However, the setting information storing unit 49 stores the same frequency and base station ID which are common to each setting. The control unit 47 corresponds to the control unit 37 shown in FIG. 14. However, the control unit 47 differs from the control unit 37 shown in FIG. 14 in that the control unit 47 performs a setting of one LTE femtocell communication unit 41 so as to be compatible with multiple providers. Here, the LTE femtocell communication unit 41 may communicate with three or more different providers. In this case, the registration provider information storing unit 48 stores registration provider informations, the number of which corresponds to that of providers. Additionally, the setting information storing unit 49 stores setting parameters, the number of which corresponds to that of providers.

A procedure for the femtocell base station 4 to register a mobile station device information and a registration provider information is similar to that shown in FIGS. 16 and 17. As explained above, the frequency and the base station ID which are common to each provider are registered to the provider service information server 602. For this reason, the frequency and the base station ID, which are included in the registration provider information obtained in step Sd5 shown in FIG. 16 and step Sd25 shown in FIG. 17, are common to each registration provider information.
If a UIM card of the provider 1 is inserted and the registration start button is held down while the femtocell base station device 4 is not being used, the control unit 47 transmits the MCC and the MNC read from the UIM card to the provider service information server, and requests for a registration provider information. Upon receiving the registration provider information, the control unit 47 writes the information to the registration provider information storing unit 48. Here, the femtocell base station device 4 may include a provider service information storing unit to previously store a provider service information. Then, the control unit 47 may obtain the registration provider information by searching the provider service information by using the MCC and the MNC as keys. As explained in FIG. 10, the registration provider information includes: an IP address including the MCC, the MNC, the IP address to be used for accessing a provider server, and an IP address including setting parameters for the LTE femtocell communication unit 41; a base station ID; frequency information; and channel information. In other words, the control unit 47 (provider service information obtaining unit) obtains the setting parameters, and a provider core network access destination information that is address information for accessing the provider core network, which are associated with the provider identification information from the reading unit. Additionally, the control unit 47 writes the provider identification information to the registration provider information storing unit.

After the writing to the registration provider information storing unit 48 is completed, the control unit 47 refers to the registration provider information and accesses the core network of the provider 1. Then, the control unit 47 registers to the core network, information of the femtocell base station device 3 and information of a mobile station device to be allowed to use the femtocell base station device 4. Thereafter, the mobile station device, into which the UIM card of the provider 1 is inserted, accesses the core network of the provider 1 by using the femtocell base station device 4. Thus, the mobile station device can use services, such as a voice call, a videophone call, and packet communication.
If the UIM card is inserted into the femtocell base station device 4 after the setting is complete, and the registration start button is held down, the card reading unit 43 reads the MCC and the MNC from the UIM card. The control unit 47 determines whether or not the MCC and the MNC are registered to the registration provider information storing unit 48. If the MCC and the MNC are not registered, the IP communication unit 12 transmits the MCC and the MNC to the provider service information server, and receives a registration provider information. The control unit 47 registers the registration provider information to the registration provider information storing unit 48. Thereafter, the femtocell base station device 4 performs a setting in a similar manner to the case of the provider 1. Thus, the mobile station device, into which this UIM card is inserted, can use the femtocell base station device 4.

If a request for communication is received from the mobile station device, the LTE femtocell communication unit (wireless communication unit) receives the IMSI that is the mobile station device information including the MCC and the MNC (provider identification informations) from the mobile station device (communication terminal device). Alternatively, the LTE femtocell communication unit receives the TMSI that is a temporal mobile station device information. If the TMSI is received, the MCC and the MNC of the corresponding mobile station device are obtained by searching the mobile station device storing unit 44. The control unit 47 reads, from the setting information storing unit 49, setting parameters associated with the received MCC and MNC. The LTE femtocell communication unit 41 (wireless communication unit) performs a setting of the LTE femtocell communication unit 41 (wireless communication unit) based on the read setting parameters (setting parameters associated with the provider identification information from the wireless communication unit). Additionally, the control unit 47 searches the registration provider information stored in the registration provider information storing unit 48 by using the received MCC and MNC as search keys, and thereby obtains an IP address. The IP address communication unit 42 (wireless communication unit) accesses a provider core network according to the obtained IP address (provider core network access destination information associated with the provider identification information from the wireless communication unit). The control unit 47 accesses the provider server via the IP communication unit 42 and the IP network 601. Thereby, the femtocell base station device 4 accesses the provider core network compatible with the mobile station device, and relays communication of the mobile station device. Thus, the femtocell base station device 4 specifies a provider compatible with multiple mobile station devices performing communication using the same LTE femtocell communication unit 41, and thereby can access the core network of the provider. When the control unit 47 performs the setting of the LTE femtocell communication unit 41 (wireless communication unit), if the mobile station device is compatible, the control unit 47 may use communication parameters set for the femtocell base station device 4 instead of using the setting parameters stored in the setting information storing unit 49 (communication parameters set for a specific provider). Thereby, communication can be performed with the setting common to multiple mobile station devices compatible with different providers, and therefore there is no need to change the setting of the LTE femtocell communication unit 41.

As explained above, the femtocell base station device 4 can be compatible with multiple providers by using one LTE femtocell communication unit, thereby enabling a more reduction in installation space and installation costs compared to the femtocell base station device 3. Additionally, the number of registration provider informations to be stored in the registration provider information storing unit 48 and the number of settings to be stored in the setting information storing unit 49 are increased, thereby enabling an increase in the number of compatible providers without increasing the number of LTE femtocell communication units 41.

A computer readable recording medium may record a program for implementing each of the units shown in FIGS. 1, 8, 14, and 19, so that processes for the respective units are performed by a computer system reading and executing the program recorded in the recording medium. The "computer system" includes OS and hardware, such as a peripheral device.

Additionally, the "computer system" includes home page providing environments (or displaying environments) if using a WWW system.
Further, the "computer readable recording medium" includes a portable medium such as a flexible disc, a magneto-optical disc, a ROM, and a CD-ROM, and a storage device such as a hard disk built in the computer system. The "computer readable recording medium" may include a medium that dynamically stores a program for a short period of time, such as a communication line used when a program is transmitted via a network such as the Internet or a communication line such as a telephone line. Additionally, the "computer readable recording medium" may include a medium that stores a program for a predetermined period of time, such as a volatile memory built in a computer system serving as a server or client when the program is transmitted via a network such as the Internet or a communication line such as a telephone line. Additionally, the program may be a program for implementing part of the aforementioned functions. Further, the program may be a program that can implement the aforementioned functions in combination with a program already recorded on the computer system.

The communication scheme used by the femtocell base station devices 1, 2, 3, and 4 are not limited to the LTE, and another communication scheme, such as the LTE-A or the W-CDMA may be used.
The two registration provider informations that the femtocell base station device 3 stores in the registration provider information storing unit are not limited to those different from each other. Registration provider informations, which are associated with the same provider and different frequencies, may be used. If multiple registration provider informations of the same provider are stored in the registration provider information storing unit 38, it is impossible to uniquely identify a registration provider information by using the MCC and the MNC as search keys. However, the same IP address is stored in the registration provider informations of the same provider. Therefore, the control unit 37 can obtain the IP address from any one of the registration provider informations, and thereby access the provider server.
The method for the femtocell base station devices 2, 3, and 4 to obtain a mobile station device information is not limited to the method in which the UIM card is inserted and the card reading unit reads the mobile station information therefrom. Instead, a mobile station device information may be obtained by using a communication function of the mobile station device, such as an Ir communication function, a Bluetooth communication function, or a wireless LAN function. In this case, the femtocell base station device 2, 3, or 4 includes a communication unit that performs the communication that implements such communication (such as an Ir receiving unit, a Bluetooth receiving unit, or a wireless LAN receiving unit), and the communication unit corresponds to the reading unit. In other words, the reading unit receives a wireless signal from the mobile station device, and thereby reads a mobile station device information. Alternatively, the femtocell base station device 2, 3, or 4 may obtain a mobile station device information from the mobile station device via a wire, such as a USB cable. In this case, the femtocell base station device 2, 3, or 4 includes a communication unit that implements the communication via the wire (such as a USB interface), and the communication unit corresponds to the reading unit.
As explained above with respect to the femtocell base station device 4, the number of providers with which the femtocell base station devices 3 and 4 are compatible is not limited to two, the femtocell base station devices 3 and 4 may be compatible with the greater number of providers. In this case, the femtocell base station device 3 or 4 includes LTE femtocell communication units, the number of which corresponds to that of providers.

Although embodiments of the present invention have been explained above, specific configurations are not limited thereto, and various design modifications may be made without departing from the scope of the present invention.

### INDUSTRIAL APPLICABILITY

The present invention is suited to be used for a communication device that communicates with a communication terminal device including a built-in detachable recording medium storing an identification information of the communication terminal device, such as a femtocell base station device that communicates with a cellular phone including a built-in UIM card.

### DESCRIPTION OF REFERENCE NUMERALS

- 1, 2, 3, and 4:: femtocell base station
- 11, 21, and 41:: LTE femtocell communication unit
- 311:: first LTE femtocell communication unit
- 312:: second LTE femtocell communication unit
- 13, 23, 33, and 43:: card reading unit
- 14, 24, 34, and 44:: mobile station device information storing unit
- 15, 25, 35, and 45:: operation input unit
- 16, 26, 36, and 46:: display unit
- 17, 27, 37, and 47:: control unit
- 18:: provider identification information storing unit
- 28, 38, and 48:: registration provider information storing unit
- 29, 39, and 49:: setting information storing unit

## Claims

1. A wireless communication device comprising:
a storing unit configured to store recording medium identification information that identifies a recording medium that is detachable;
a network communication unit that is connectable to a communication network;
a reading unit configured to read the recording medium identification information stored in the recording medium;
a recording medium identification information registering unit configured to write, to the storing unit, the recording medium identification information read by the recording unit;
a wireless communication unit configured to wirelessly communicate with a communication terminal device attached with the recording medium, and to receive recording medium identification information from the communication terminal device; and
a communication control unit configured to at least control the network communication unit to transmit to the communication network, a signal from the communication terminal device, or to control the wireless communication unit to transmit to the communication terminal device, a signal from the communication network which is addressed to the communication terminal device, if the communication control unit determines that the recording medium identification information read from the storing unit is identical to the recording medium identification information received by the wireless communication unit.

2. The wireless communication device according to claim 1, further comprising:
a registration provider information storing unit configured to store provider identification information;
a provider service information obtaining unit configured to obtain a setting parameter for the wireless communication unit; and
a wireless communication setting unit configured to perform a setting of the wireless communication unit,
wherein the reading unit is configured to read provider identification information from the recording medium,
the provider service information obtaining unit is configured to check the provider identification information stored in the registration provider information storing unit against the provider identification information from the reading unit, and to obtain, according to a result of checking, a setting parameter according to the provider identification information from the reading unit, from the wireless communication device, or from an external server through the network communication unit, the external server being connected to the communication network, and
the wireless communication setting unit is configured to perform the setting of the wireless communication unit based on the setting parameter obtained, and to write the provider identification information from the reading unit to the registration provider information storing unit.

3. The wireless communication device according to claim 2, further comprising:
a plurality of wireless communication units,
wherein the registration provider information storing unit is configured to store a plurality of provider identification informations while associating each of the provider identification informations with any one of the wireless communication units,
the network communication unit is configured to obtain the setting parameter if the provider identification information read by the reading unit is not identical to any one of the provider identification informations stored in the provider identification information storing unit,
the wireless communication setting unit is configured to perform a setting of any of the wireless communication units based on the setting parameter obtained, to delete the provider identification information associated with the wireless communication unit subjected to the setting, and to write the provider identification information read by the reading unit while associating the provider identification information read with the wireless communication unit.

4. The wireless communication device according to claim 2, wherein the network communication unit is configured to obtain, from the wireless communication device or the external server, provider core network access destination information that is address information to be used for accessing the provider core network, according to the provider identification information from the reading unit, and to access the provider core network according to the provider core network access destination information.

5. The wireless communication device according to claim 2, wherein the provider service information obtaining unit is configured to obtain the setting parameter and provider core network access destination information that is address information to be used for accessing the provider core network, the setting parameter and the provider core network access destination information being associated with the provider identification information from the reading unit,
the provider service information obtaining unit is configured to write the provider identification information to the registration provider information storing unit,
the wireless communication unit is configured to receive provider identification information from the wireless terminal device,
the wireless communication setting unit is configured to perform a setting of the wireless communication unit based on the setting parameter associated with the provider identification information from the wireless communication unit, and
the network communication unit is configured to access the provider core network according to the provider core network access destination information associated with the provider identification information from the wireless communication unit.

6. The wireless communication device according to claim 1, wherein the reading unit is configured to write to the recording medium, access allowance/forbiddance determination information that is information for determining whether or not an access to the wireless communication base station is allowed.

7. The wireless communication device according to claim 1, wherein the reading unit reads the recording medium identification information from the recording medium according to a deletion order from an external unit, and
the control unit is configured to delete, from the storing unit, recording medium identification information identical to the recording medium identification information read by the reading unit.

8. The wireless communication device according to claim 6, wherein the control unit is configured to delete, from the recording medium, the access allowance/forbiddance determination information according to the deletion order from the external unit.

9. The wireless communication device according to claim 1, wherein the reading unit includes a connection unit to which the recording medium detachable is to be connected, and
the reading unit is configured to read the recording medium identification information from the recording medium connected to the connection unit.
